# EUROPÄISCHE PATENTSCHRIFT

(11) **EP 3 357 050 B1**
(45) Veröffentlichungstag und Bekanntmachung des Hinweises auf die Patenterteilung: **26.10.2022**
(21) Anmeldenummer: 16754427.9
(22) Anmeldetag: 02.08.2016
(51) Int. Cl.: G08G 1/16

(54) **VORRICHTUNG UND VERFAHREN ZUR CHARAKTERISIERUNG VON OBJEKTEN**
DEVICE AND METHOD FOR THE CHARACTERIZATION OF OBJECTS
DISPOSITIF ET PROCÉDÉ DE CARACTERISATION D'OBJETS

(30) Priorität: 29.09.2015 DE 102015012475; 29.03.2016 DE 102016205139
(43) Veröffentlichungstag der Anmeldung: 08.08.2018
(73) Patentinhaber: Volkswagen Aktiengesellschaft, 38440 Wolfsburg (DE)
(72) Erfinder: GÜNTHER, Hendrik-Jörn, 30173 Hannover (DE); RECH, Bernd, 38556 Bokensdorf (DE); KLEINAU, Sandra, 38531 Rötgesbüttel (DE); LEHMANN, Bernd, 38444 Wolfsburg (DE); GLÄSER, Stefan, 38104 Braunschweig (DE); ENGEL, Monique, 38110 Braunschweig (DE); BUBURUZAN, Teodor, 38118 Braunschweig (DE)
(86) Internationale Anmeldenummer: PCT/EP2016/068438
(87) Internationale Veröffentlichungsnummer: WO 2017/054965

(56) Entgegenhaltungen:
- WO-A1-2015/009221
- DE-A1-102006 055 344
- DE-A1-102009 034 214
- DE-A1-102011 107 111
- DE-A1-102012 205 299
- DE-A1-102014 200 279

## Beschreibung

Ausführungsbeispiele der vorliegenden Erfindung betreffen allgemein die Erkennung und Charakterisierung von Objekten in einem Umfeld eines Fahrzeugs.

Die Einführung der V2X (Vehicle to X, wobei X zum Beispiel für Vehicle oder auch Infrastructure stehen kann) -Technologie ermöglicht eine fundamentale Erweiterung des Erfassungsbereichs eines Fahrzeugs um Objekte, die sich außerhalb der Sichtweite (der Line-of-Sight) der Fahrzeugsensorik befinden. Die auf dem aktiven Nachrichtenaustausch basierende Technologie ermöglicht darüber hinaus das Übermitteln von Informationen, die nicht über die lokalen Sensoren ermittelt werden können. Im Rahmen der Standardisierungsarbeiten der ETSI (European Telecommunications Standards Institute) wurden für den europäischen Markt bereits Nachrichteninhalte definiert, die eine Beschreibung eines Verkehrsteilnehmers im Umfeldmodel mithilfe von Fahrzeugstatusnachrichten ermöglichen (die so genannten Cooperative Awareness Message (CAM)) bzw. eine dezidierte Warnung vor Gefahrensituationen realisieren (die so genannten Decentralized Environmental Notification Message (DENM)). Eine Herausforderung bei der Einführung der V2X-Technologie ist das Erreichen einer als so genannte kritische Masse bezeichnete Mindestanzahl an Kommunikationspartnern, die zur Marktakzeptanz erforderlich ist.

Die bereits existierenden Standards zur ETSI ITS-G5 Referenzarchitektur berücksichtigen bereits die oben genannten CAM und DENM Informationen, die sich auf die Eigenschaften des sendenden Fahrzeugs beschränken. Informationen über Fahrzeuge ohne solche V2X-Kommunikation können nur mit der Sensorik des eigenen Fahrzeugs erfasst werden, was zu einer unvollständigeren Objekteinschätzung führen kann.

DE 10 2012 205 299 A1 lehrt ein Verfahren und eine Vorrichtung zur Objektklassifizierung für ein Sicherheitssystem eines Fahrzeugs. Ferner betrifft die Erfindung das Sicherheitssystem.

DE 10 2014 200 279 A1 lehrt ein Verfahren und eine Vorrichtung zum Detektieren von Objekten in einem Umfeld eines Fahrzeugs. Die Erfindung betrifft ferner ein Computerprogramm.

DE 10 2011 107111 A1 lehrt ein Verfahren zum Empfang von Daten bei der drahtlosen Fahrzeug-zu-Umgebung-Kommunikation (C2X), insbesondere der mobilen Fahrzeug-zu-Umgebung-Kommunikation oder der Fahrzeug-zu-Fahrzeug-Kommunikation (C2C).

Daher wäre es wünschenswert, die Objekteinschätzung in Bezug auf Fahrzeuge ohne eigene V2X-Kommunikation zu verbessern.

Dem wird durch eine Vorrichtung und ein Verfahren jeweils mit den Merkmalen der unabhängigen Patentansprüche Rechnung getragen. Vorteilhafte Ausgestaltungen und Weiterbildungen sind Gegenstand der abhängigen Ansprüche.

Die Erfindung schafft eine Charakterisierung von zu identifizierenden Objekten. Dies umfasst eine Erfassung von Sensordaten, die eine erste Quelle von Sensorinformation und eine zweite Quelle von Sensorinformation umfassen. Weiter umfasst das Verfahren eine Bestimmung zumindest eines zu identifizierenden Objekts basierend auf den Sensordaten. Ferner umfasst das Verfahren eine Selektion derjenigen Sensorinformation der ersten Quelle, die dem zu identifizierenden Objekt zugeordnet ist. Weiter umfasst das Verfahren eine Charakterisierung des zu identifizierenden Objekts mittels Informationen, die auf den selektierten Sensorinformationen der ersten Quelle basieren.

Gemäß der Erfindung wird die Bestimmung eines zu identifizierenden Objekts auf Sensordaten aus mehreren Quellen gestützt, während die Charakterisierung der identifizierten Objekte sich auf Sensordaten aus der ersten Quelle beschränkt. Die erste Quelle ist das eigene Fahrzeug mit Sensoren bekannter Qualität. Entsprechend können erkannte Objekte charakterisiert werden mit Sensorinformationen bekannter Qualität, was für nachgeschaltete Funktionen wie zum Beispiel einem Fahrzeugbeeinflussungssystem zu verbesserten Eingangsdaten führt.

Vorteilhaft kann somit die Einschätzung in Bezug auf Fahrzeuge ohne eigene V2X Kommunikation verbessert werden.

Unter Charakterisierung ist eine Kennzeichnung zu verstehen, die zu identifizierenden Objekten gewisse Eigenschaften zuschreibt. Beispielsweise kann eine Charakterisierung durch die Daten von Sensoren erfolgen, die das Umfeld eines Fahrzeugs beschreiben. So kann zum Beispiel das Radarsignal, das Lidarsignal (Lidar = Light detection and ranging), das Kamerasignal et cetera des eigenen Fahrzeugs zur Charakterisierung eines fremden Fahrzeugs herangezogen werden.

Zu identifizierende Objekte sind alle Gegenstände, Personen und Fahrzeuge, die sich im Fahrzeugumfeld aufhalten. Sie werden kategorisiert und zum Beispiel als Fahrzeug, Person oder Gebäude eingestuft. Darüber hinaus kann in verschiedenen Stufen eine feinere Identifizierung der Objekte erfolgen. Beispielsweise kennt die oben genannte CAM-Information Fahrzeugklassen, Masse, Position und dynamisches Verhalten des Fahrzeugs, die zur genaueren Identifizierung der Objekte herangezogen werden können.

Eine Erfassung von Sensordaten erfolgt mit Hilfe geeigneter elektronischer Komponenten. Bekannte Sensoren zur Erfassung von Objekten im Fahrzeugumfeld basieren zum Beispiel auf Techniken wie Radar, Lidar (Light detection and ranging), Kameras et cetera. Im Betrieb liefern diese Sensoren Daten, die von den angeschlossenen elektronischen Komponenten erfasst, gespeichert und ausgewertet werden. Dabei sind verschiedenste Datenraten, Dateninhalte und Zeitabstände von den verschiedenen Sensoren zu erwarten. Entsprechend ist eine Aufbereitung der verschiedenen Sensordaten zur gemeinsamen Verarbeitung notwendig.

Gemäß der Erfindung werden verschiedene Quellen von Sensorinformationen für die Identifizierung von Objekten herangezogen. So werden fahrzeugeigene Sensoren als eine erste Quelle angesehen. Eine zweite Quelle können Sensoren eines fremden Fahrzeugs sein. Dabei können gleichartige oder verschiedene Sensoren in der ersten und der zweiten Quelle vorhanden sein. So können zum Beispiel beide Quellen mit Radarsensoren ausgestattet sein. Alternativ können die Quellen auch unterschiedliche Sensortypen umfassen. Die zweite Quelle kann auch Sensorinformationen mehrerer Fahrzeuge umfassen. Weiter kann die zweite Quelle auch Daten von ortsfesten Einrichtungen umfassen, die zum Beispiel als Infrastruktur ausgebildet sein können. Auch ortsfeste Einrichtungen können dabei Sensorinformationen übermitteln, die auf Sensortypen beruhen, die im eigenen Fahrzeug angewendet werden, zum Beispiel Radarsensoren.

Die Bestimmung zumindest eines zu identifizierenden Objekts basierend auf den Sensordaten kann auf verschiedene Arten erfolgen. Gemäß der Erfindung kommt ein hierarchisches Modell zum Einsatz, bei dem eine Datenwolke mit allen Sensordaten als Basis dient. In einem ersten Schritt werden nun aus den Daten der Datenwolke Fragmente von Objekten identifiziert, zum Beispiel Teile eines Armes, eines Rumpfes oder eines Kopfes. In einem zweiten Schritt wird dann versucht, die Fragmente zu Teilobjekten zu verbinden, also zu Armen, einem Rumpf oder einem Kopf. Im dritten Schritt erfolgt dann die eigentliche Objekterkennung, die im genannten Beispiel das Objekt einer Person identifiziert. Dieses Objekt wird nun, angereichert durch weitere das Objekt beschreibende Daten, nachfolgenden Einrichtungen wie einem Fahrzeugbeeinflussungssystem zur Verfügung gestellt. Dabei können die Sensor-Roh-Daten im Laufe der Objekterkennung auch verändert werden.

Eine Selektion derjenigen Sensorinformationen der ersten Quelle, die dem zu identifizierenden Objekt zugeordnet sind, kann auf Basis numerischer Zuordnung erfolgen. So können Sensorinformationen der ersten Quelle zum Beispiel nummeriert in einer Datenbank abgelegt werden. Wird aus diesen und in der Regel weiteren Informationen ein Objekt identifiziert, kann das Objekt Verweise auf die ursprünglichen Sensorinformationen enthalten, zum Beispiel als Bezug auf die Nummerierung. Entsprechend kann somit den erkannten Objekten die zugehörige Sensorinformation zugeordnet werden, die auch nach Quellen unterscheidbar sein kann.

Das Charakterisieren des zu identifizierenden Objekts mittels Informationen, die auf den selektierten Sensorinformationen der ersten Quelle basieren, kann zum Beispiel durch Hinzufügen der selektierten Sensorinformation zu den Objektdaten erfolgen. Alternativ oder ergänzend kann auch eine den Objektdaten hinzugefügte Adresse oder Nummerierung auf die selektierten Sensorinformationen verweisen. Diese Sensorinformationen können den Sensor-Roh-Daten entsprechen, die im Gegensatz zu den zur Ermittlung der Objekte veränderten Sensordaten ein unverfälschtes Abbild der Fahrzeugumgebung darstellen.

Entsprechend sind mehrere Formen der Charakterisierung möglich.

Vorteilhaft kann somit beispielsweise die Objekteinschätzung in Bezug auf Fahrzeuge ohne eigene V2X-Kommunikation verbessert werden.

Die erste Quelle von Sensorinformation ist als lokaler Sensor eines Fahrzeugs ausgebildet und stellt Sensor-Roh-Daten zur Verfügung. Die zweite Quelle von Sensorinformation ist als ferner Sensor ausgebildet und stellt über eine Schnittstelle Sensor-Nachrichten zur Verfügung. Der lokale Sensor kann das Umfeld des Fahrzeugs erfassen und der ferne Sensor den Status zumindest eines weiteren Fahrzeug erfassen und/oder das Umfeld des zumindest einen weiteren Fahrzeugs erfassen. Die Status-Erfassung kann dabei als Cooperative Awareness Message -CAM- und/oder als Decentralized Environmental Notification Message -DENMausgebildet sein.

Lokale Sensoren eines Fahrzeugs sind am und im Fahrzeug selbst montiert. Typische Vertreter der lokalen Sensoren sind Radar-, Lidar-, und Kamera-Sensoren. Diese sind angeordnet, um das Umfeld des Fahrzeugs zu erfassen. Dabei kann sich das Umfeld bis zu 200 Meter um das Fahrzeug herum erstrecken. Typische Montageplätze finden sich in Karosserie und Stoßstangen von Fahrzeugen. Optional sind gleiche Sensortypen auch mehrfach verbaut, um zum Beispiel das vor und hinter dem Fahrzeug liegende Umfeld zu erfassen.

Diese lokalen Sensoren liefern Daten, die im Folgenden auch als Rohdaten oder Sensor-Roh-Daten bezeichnet werden. Diese Sensor-Roh-Daten sind sensor-Typ-und bauform-bezogen und unterscheiden sich unter anderem in Datenmenge und -geschwindigkeit. Nachgeschaltete Elektronik empfängt die Daten der Sensoren und kann sie zum Beispiel in einer Datenwolke anordnen und anschließend für nachfolgende Anwendungen aufbereiten. Diese können Fahrerassistenzsysteme umfassen, die die erkannten Objekte zum Beispiel zur Fahrzeugbeeinflussung heranziehen.

Ferne Sensoren sind Sensoren anderer Verkehrsteilnehmer oder von der Infrastruktur. Die Daten solcher fernen Sensoren können über eine Schnittstelle von mobilen Ad-Hoc-Netzwerken übertragen werden, die zum Beispiel nach einer ETSI (European Telecommunications Standards Institute) ITS-G5 (Intelligent Transport Systems) Referenzarchitektur ausgeprägt sind. Die zur Verfügung gestellten Sensornachrichten können dabei Daten von Sensoren umfassen, die auch lokal am Fahrzeug eingesetzt werden und das Fahrzeugumfeld beziehungsweise das Umfeld der Infrastruktur erfassen. Darüber hinaus können Sensornachrichten auch Nachrichten umfassen, die den aktuellen Status oder den Einsatz eines Fahrzeugs umfassen. Dazu können Sensoren eingesetzt werden, die die Anzahl der Insassen, die Geschwindigkeit des Fahrzeugs, die Masse des Fahrzeugs und andere Kenngrößen erfassen. Dies kann auch in Speichern abgelegte Daten umfassen sowie bestimmte Betriebszustände wie Einsatzfahrt mit Blaulicht und Martinshorn.

Schnittstellen sind nicht auf standardisierte Schnittstellen zum Beispiel nach ETSI beschränkt. So können auch nicht standardisierte Schnittstellen zum Einsatz kommen, die zum Beispiel herstellerspezifisch ausgebildet sein können. Auf diese Weise können zusätzliche Sensorinformationen empfangen werden, die Komfortfunktionen oder auch umfänglichere Informationen enthalten, die zum Beispiel im ETSI-Standard nicht enthalten sind.

Sensorinformationen zum Status eines Fahrzeugs können die Entfernung zum vorherigen Fahrzeug und zum nachfolgenden Fahrzeug umfassen. Darüber hinaus kann die Durchschnittsgeschwindigkeit sowie die Masse und die Geometrie das Fahrzeugs enthalten sein. Auch eine Signalisierung "Fahrzeug im Einsatz", zum Beispiel von Polizei oder Feuerwehr, kann in der Sensorinformationen zum Status eines Fahrzeugs enthalten sein. Insgesamt beschränken sich somit die Sensorinformationen zum Status eines Fahrzeugs nicht auf unverarbeitete Sensorinformationen, es können auch bereits verarbeitete Sensorinformationen in einem Status eines Fahrzeugs enthalten sein. Darüber hinaus können auch Gefahrenwarnungen umfasst sein. So kann vor Glatteis, Sturm oder Nebel gewarnt werden, vor Geisterfahrern, Rotlicht-Missachtung und ähnlichen Gefährdungen.

Sensorinformationen zum Status eines Fahrzeugs können auch als Cooperative Awareness Message -CAM- und/oder als Decentralized Environmental Notification Message -DENMausgebildet sein. Diese sind standardisiert bei ETSI in den Standarddokumenten EN 302 637-2, zum Beispiel in der Version V1.3.1 und ETSI EN 302 637-3, zum Beispiel in der Version V1.2.1, V1.2.2 und V1.3.2. Die Verwendung der Standards sichert weitgehende Kompatibilität zwischen Fahrzeugen verschiedener Hersteller.

Bei einigen Ausführungsformen kann das Bestimmen des zu identifizierenden Objektes neben den dem identifizierten Objekt zugeordneten Sensordaten ferner auf zusammengeführten Daten basieren, welche auf einer Kombination von Sensor-Roh-Daten einer Mehrzahl von Sensoren basieren. Weiter können die Sensordaten und die zusammengeführten Daten zirkuläre Speicher zur Speicherung von Werten für verschiedene Erfassungszeitpunkte nutzen.

Die Zuordnung von Sensordaten zu Objekten ist eine wesentliche Funktion der Objekterkennung. Wie bereits oben skizziert, kann diese Zuordnung einem mehrstufigen Prozess erfolgen, bei dem zuerst Sensordaten aus zum Beispiel einer Datenwolke der Sensordaten als Fragmente von Objekten identifiziert werden, die in weiteren Schritten zu Teilobjekten und schließlich zu Objekten ergänzt werden. Entsprechend können Sensordaten Objekten zugeordnet werden. Darüber hinaus werden Objekte mit Hilfe von fusionierten Sensorinformationen identifiziert. So werden für Objekte typische Erscheinungsformen der verschiedenen Sensortypen miteinander in Verbindung gebracht, um zum Beispiel typische Bewegungsabläufe und andere Objektspezifika zu erkennen. Dabei können auch fehlende Aspekte rechnerisch ergänzt werden, um auf Objekte schließen zu können. Auch können Sensorinformationen mit einem Kalman-Filter bearbeitet werden. Mit anderen Worten helfen Kalman-Filter zum Ausgleichen der von den Sensoren verursachten Störungen, deren Ergebnis dann als fusionierte Sensorinformationen abgelegt wird. Solche zusammengeführten oder fusionierten Daten werden ebenfalls in Verbindung mit den Objekten gespeichert.

Eine Existenzwahrscheinlichkeit erkannter Objekte hängt wesentlich von einer kontinuierlichen Erkennung des Objekts durch die zugehörigen Sensoren ab. Darüber hinaus veralten Sensorinformationen relativ schnell, sei es, dass ein Objekt sich aus dem Betrachtungsraum entfernt oder sich in diesem Raum verändert. Entsprechend bieten sich zirkuläre Speicher an, in denen aufeinanderfolgende Sensorinformationen für jeden auf das Objekt bezogenen Sensor ablegbar sind. Die n+1 Sensorinformation überschreibt dabei den zeitlich ältesten Eintrag, die n+2 Sensorinformation den zweitältesten Eintrag und so weiter. Diese Speicher können sensorabhängig verschiedene Größen und Ausprägungen haben. Sie können sich sensorübergreifend auf die jeweils gleiche Zeitbasis beziehen.

Vorteilhaft kann so die Objekterkennung von Objekten verbessert werden.

Optional können mit den identifizierten Objekten zusätzliche Informationen bereitgestellt werden, die auf den Sensordaten und auf den zusammengeführten Daten basieren.

Daten, die auf Sensordaten und auf zusammengeführten Daten basieren, können zum Beispiel als bearbeitete Sensordaten und zusammengeführten Daten, auch fusionierte Daten genannt, ausgeführt sein. Wie bereits skizziert, können diese Daten im Laufe der Objekterkennung modifiziert werden und unterscheiden sich somit von den Sensor-Roh-Daten. Weiter können diese Daten auch von fernen Sensoren stammen und somit die Datenbasis deutlich erhöhen. Darüber hinaus kann den Objekten eine Vielzahl weiterer Eigenschaften zugeschrieben werden. Beispielhaft sei ein Parameter zur Existenzwahrscheinlichkeit, ein voraussichtlicher Zeitpunkt zur Löschung des Objektes (Time Out) sowie die Referenz der Daten bezogen auf ein lokales oder ein globales Koordinatensystem genannt.

Vorteilhaft können somit vollständigere und plausibilisierte Informationen für die erkannten Objekte zur weiteren Bearbeitung zur Verfügung gestellt werden.

Bei einigen Ausführungsformen kann ein Datenfeld über ein mobiles Netzwerk empfangen werden. Dieses Datenfeld kann ein Beschreibungsfeld umfassen, das eine Identifikation des Fahrzeugs und/oder eine Position des Fahrzeugs und/oder einen Abstand des Fahrzeugs und/oder eine Geschwindigkeit des Fahrzeugs und/oder eine Beschleunigung des Fahrzeugs und/oder zumindest eine Eigenschaft der lokalen Sensoren des Fahrzeugs umfasst. Weiter kann das Datenfeld einen dynamischen Objekt-Container umfassen, der seinerseits die Beschreibung zumindest eines dynamischen Objekts umfasst. Weiterhin kann das Datenfeld einen statischen Objekt-Container umfassen, der die Beschreibung zumindest eines statischen Objekts umfasst.

Ein Datenfeld kann als eine Aneinanderreihung von Strukturelementen mit gegebenen Bedeutungen ausgeführt sein. Solche Datenfelder sind typisch für den Datenaustausch zwischen maschinellen Entitäten und sind im Detail festgelegt und darüber hinaus auch häufig standardisiert. Für eine Übertragung werden solchen Datenfelder häufig zusätzliche Redundanz hinzugefügt und abgestimmt auf das Übertragungsmedium auch kodiert. Üblicherweise beginnen sie mit einer Kopfinformation, auch Header genannt, die das Datenfeld identifiziert und darüber hinaus weiter Informationen enthalten kann.

Weiter kann das Datenfeld ein Beschreibungsfeld umfassen, in dem generelle Informationen abgelegt sein können, die für die nachfolgenden Felder gelten. Im vorliegenden Fall können das Informationen sein, die das das Datenfeld aussendende Fahrzeug und seine Eigenschaften beschreiben.

So kann zum Beispiel eine Identifikation des Fahrzeugs im Beschreibungsfeld enthalten sein, das Auskunft über Hersteller, Fahrzeugtyp, Herstellungsdatum, Ausstattungsmerkmale et cetera enthalten kann.

Weiter kann in dem Feld die Position des Fahrzeugs enthalten sein. Diese kann sich zum Beispiel auf ein globales Koordinatensystem beziehen mit Angaben zu Länge und Breite. Sie kann sich beispielsweise auch auf das World Geodetic System 1984 (WGS 84) beziehen, das als geodätisches Referenzsystem eine einheitliche Grundlage für Positionsangaben auf der Erde und im erdnahen Weltraum zur Verfügung stellt. Auch andere Bezugssysteme sind denkbar.

Weiter können im Beschreibungsfeld ein oder mehrere Abstände von Objekten im Umfeld des sendenden Fahrzeugs angegeben sein. Dies kann auch den Abstand zum empfangenden Fahrzeug umfassen, sodass die lokale Einschätzung des Abstands überprüft werden kann. Die Abstände können zu allen berichteten Objekten des sendenden Fahrzeugs ausgewiesen werden, die in allen Himmelsrichtungen positioniert sein können.

Darüber hinaus kann auch die Geschwindigkeit des sendenden Fahrzeugs angegeben werden. Auch hier sind Angaben in verschiedenen Maßeinheiten (Kilometer pro Stunde, Meilen pro Stunde) denkbar, die auch gemeinsam enthalten sein können.

Weiter kann die Beschleunigung des Fahrzeugs angegeben werden. Dies kann sowohl die Längs- als auch die Querbeschleunigung umfassen und schließt die entsprechenden Verzögerungen des Fahrzeugs mit ein. Geschwindigkeit und Beschleunigung können auch für eine gewisse vergangene Zeit übermittelt werden, sodass ein Verlauf über einen gewissen Zeitraum bekannt wird.

Verschiedene dieser und/oder auch anderer Daten lassen sich auch in standardisierter Form übertragen, zum Beispiel in den bereits genannten CAM- und DENM-Informationen, wie in ETSI standardisiert. Diese Daten können auch im Beschreibungsfeld angeordnet sein. Weiter können auch Parameter der lokalen Sensoren des sendenden Fahrzeugs übermittelt werden. Dies kann insbesondere die Anordnung der Sensoren am Fahrzeug betreffen und/oder die Eigenschaften der verwendeten Sensoren. So können Reichweite, Erfassungswinkel, Auflösung und andere Parameter pro Sensortyp übermittelt werden. Falls verschiedene Sensoren des gleichen Typs (zum Beispiel Radar) verwendet werden, zum Beispiel zur Erfassung des vorderen, des seitlichen und des hinteren Raumes um das Fahrzeug, können auch diese zugehörigen Parameter übermittelt werden. Auch können Klassen für die Leistungsfähigkeit der Sensortypen bekannt sein, die ebenfalls übermittelt werden können.

In den dynamischen Objekt-Containern werden Daten dynamischer Objekte übertragen, die das sendende Fahrzeug mit Hilfe seiner Sensoren erkannt hat. Dies können insbesondere andere Verkehrsteilnehmer sein, die sich mit dem sendenden und dem empfangenden Fahrzeug zusammen den Straßenraum teilen. Insbesondere können dies Kraftfahrzeuge verschiedenster Ausprägung, Fahrradfahrer und Fußgänger, Tiere und Gegenstände sein, die sich auf oder neben der Fahrbahn, in Kreuzungsbereichen oder anderen Fahrbahnsituationen bewegen.

Diese Daten der lokalen Sensoren des sendenden Fahrzeugs können gleiche oder verschiedene Typen von Sensoren umfassen, bezogen auf das empfangende Fahrzeug. So können zum Beispiel in beiden Fahrzeugen Radar-, Lidar- und Infrarottechniken zur Erfassung der Fahrzeugumgebung zur Anwendung kommen. Weiter können diese Daten als Sensor-Roh-Daten übermittelt werden und so vom sendenden Fahrzeug unverarbeitet zur Objekterkennung beim empfangenden Fahrzeug herangezogen werden. Vorteilhaft kann hier die lokale Objektbildung mit zusammengeführten Daten auf noch unveränderte Sensor-Roh-Daten des sendenden Fahrzeugs zurückgreifen und so eine Verfälschung durch bereits veränderte Daten vermeiden.

Sie können aber auch in verarbeiteter Form übermittelt werden und bereits erkannte Objekte im Umfeld des zu sendenden Fahrzeugs umfassen, wobei dafür die Sensor-Roh-Daten bereits verändert sein können. Alternativ können auch Sensor-Roh-Daten und Objektdaten mit veränderten Sensordaten übermittelt werden. Insbesondere zu Anfang der V2X-Kommunikation, die auch C2X, (Car-To-X, wobei X für verschiedenste Mittel steht, die Fahrzeuge (C2C, Car To Car), Infrastruktur (C2I, Car To Infrastructure) und anderes umfassen kann) genannt wird, bei wenigen Fahrzeugen mit dieser Technik kann somit vorteilhaft die Erkennung und Einschätzung von Fahrzeugen ohne V2X verbessert werden.

Weiter kann in dem dynamischen (und auch im statischen) Objekt-Container eine maximale Anzahl von Objekten beschrieben werden.

Generell kann auch eine Beschränkung bei der Übermittlung der von den lokalen Sensoren des sendenden Fahrzeugs erkannten Daten erfolgen. Die Auswahl kann auf solche Daten begrenzt sein, die im sendenden Fahrzeug erkannten Objekten zugeordnet sind. Die Erkennung solcher Objekte kann auch im sendenden Fahrzeug wiederum Daten umfassen, die im Rahmen der V2X-Kommunikation vom sendenden Fahrzeug empfangen wurden. Dabei können zum Beispiel von dritten Fahrzeugen empfangene Daten nicht weitergeleitet werden, sondern nur der Objekterkennung dienen. In diesem Falle werden zum Beispiel nur die Sensor-Roh-Daten der lokalen Sensoren des sendenden Fahrzeugs, soweit sie Objekten zugeordnet sind, übermittelt.

Darüber hinaus können die zu sendenden Daten auch von der Existenzwahrscheinlichkeit des identifizierten Objekts abhängen. Diese Existenzwahrscheinlichkeit ist ein üblicher Parameter bei Objekterkennungssystemen und bringt zum Ausdruck, für wie wahrscheinlich das System die Existenz dieses Objektes hält. So können zum Beispiel nur Daten für solche Objekte übermittelt werden, die auf Grund des Maßes ihrer Existenzwahrscheinlichkeit auch im sendenden Fahrzeug eine Reaktion eines lokalen Fahrzeugassistenzsystems hervorrufen würden.

Im statischen Objekt-Container werden Daten statischer Objekte übertragen. Dies kann in zu dynamischen Objekten vergleichbarer Weise erfolgen.

Insbesondere zu Anfang der V2X-Kommunikation mit wenigen Fahrzeugen mit dieser Technik kann somit vorteilhaft die Erkennung und Einschätzung von Fahrzeugen ohne V2X-Funktion verbessert werden. Dies ist insbesondere der Fall, wenn nur Sensor-Roh-Daten übermittelt werden, da diese die unverfälschte Wahrnehmung der jeweiligen Umgebung abbilden.

Optional kann der dynamische Objekt-Container zumindest ein dynamisches Objekt umfassen. Letzteres umfasst seinerseits Sensorinformation der ersten Quelle und/oder eine Lokalisierungsinformation, die eine lokale oder eine globale Bezugsgröße enthält und/oder eine Dynamikangabe zur Beschreibung der Objektdynamik und/oder eine Klassifikation des Objekts und/oder eine geschätzte geometrische Dimension des Objekts. Der statische Objekt-Container kann zumindest ein statisches Objekt umfassen. Dieser umfasst seinerseits Sensorinformation der ersten Quelle und/oder eine Lokalisierungsinformation und/oder eine Klassifikation des Objekts und/oder eine geschätzte geometrische Dimension des Objekts oder ein Belegungsgitter eines Erfassungsraums.

Pro übermitteltem dynamischem Objekt wird im dynamischen Objekt-Container eine dynamische Objektbeschreibung angeordnet. Gleiches gilt für die statischen Objekte. Diese dynamische Objektbeschreibung kann Sensorinformationen der oder des Sensors enthalten und die zugehörigen Sensor-Rohdaten. Die Sensorinformationen können spezifische Sensoreigenschaften enthalten wie Auflösung, Reichweite, Sensorgeneration et cetera. Auch spezifische Lokalisierungsinformationen des Sensors können enthalten sein, wie ein spezifischer Erfassungswinkel oder eine spezifische Positionierung oder eine spezifische horizontale oder vertikale Ausrichtung des Sensors im oder am Fahrzeug. Weiter können insbesondere die Sensor-Roh-Daten eine auf das sendende Fahrzeug bezogene Lokalisierungsinformation umfassen. Alternativ können die Sensordaten auch auf ein globales Referenzsystem bezogen sein, das zum Beispiel nach ETSI TS 102 894-2 ausgestaltet sein kann, das auf das bereits erwähnte WGS-84 Referenz Model (World Geodetic System 1984) Bezug nimmt.

Dynamikangaben zu den Objekten können alle Angaben umfassen, die auch die das Umfeld beobachtende Fahrzeuge charakterisiert und zum Beispiel als CAM- oder DENM-Nachricht ausgesendet werden kann. Entsprechend können Schätzungen der Geschwindigkeit des Objekts, seiner Beschleunigung beziehungsweise seiner Verzögerung, seiner Masse und anderer in den genannten ETSI-Standard gelisteten Parameter, die Dynamikangaben zu den Objekten enthalten, umfasst sein.

Klassifikationen der Objekte können zum Beispiel gemäß ETSI TS 102 894-2 (Intelligent Transport Systems (ITS); Users and applications requirements; Part 2: Applications and facilities layer common data dictionary) erfolgen, zum Beispiel nach Version 1.2.1. Dieser Standard kennt zum Beispiel die Klassen Nachrichten-Management (Message management) und Applikationsnutzung (application usage). Auch sind Klassifikationen nach ITS-Applikationsklassen (application classes) bekannt. Darüber hinaus sind auch Unterklassen bekannt, die zur Objektklassifikation herangezogen werden können.

Geschätzte geometrische Dimensionen des Objekts können als Länge, Breite und Stärke oder auch als Punkte, Geraden, Ebenen, Abständen und/oder Winkeln angegeben werden oder in gemischten Parametern. Sie können dabei geometrische Formen angeben und/oder feinere Strukturen des beobachteten Gegenstandes bezeichnen. Zum Beispiel können auch geometrische Klassen für verschieden dimensionierte Mehrspurfahrzeuge, Einspur-Fahrzeuge, Fußgänger, Bauwerke (zum Beispiel Brücken, Verkehrsleitinfrastruktur wie Leitplanken) ergänzt werden.

Statische Objekte im statischen Objekt-Container können vergleichbar zu dynamischen Objekten aufgebaut sein und entsprechend die bei den dynamischen Objekten erläuterten Parameter umfassen. An Stelle oder in Ergänzung zu den beschriebenen geometrischen Formen kann zur geometrischen Beschreibung auch das Prinzip der Belegungsgitter (occupancy grid) verwendet werden. Dabei wird der untersuchte Raum, auch Erfassungsraum genannt, in kleine Abschnitte eingeteilt und für jede X, Y, Z-Position wird sich die Wahrscheinlichkeit gemerkt, dass dort "etwas" oder "nichts" ist. Dies kann für zwei- oder dreidimensionale Betrachtungen angewendet werden.

Gemäß eines weiteren Aspekts schaffen Ausführungsbeispiele eine Vorrichtung zur Charakterisierung von zu identifizierenden Objekten. Diese Vorrichtung umfasst Sensordatenerfassungs-Komponenten zur Erfassung von Sensordaten, die eine erste Quelle von Sensorinformation und eine zweite Quelle von Sensorinformation umfassen. Weiter sind Bestimmungs-Komponenten zur Bestimmung zumindest eines zu identifizierenden Objekts basierend auf den Sensordaten von der Vorrichtung umfasst. Darüber hinaus sind Selektions-Komponenten zur Selektion derjenigen Sensorinformation der ersten Quelle, die dem zu identifizierenden Objekt zugeordnet sind, von der Vorrichtung umfasst. Weiterhin sind Schnittstellen zur Bereitstellung des zu identifizierenden Objekts und von Informationen, die auf den selektierten Sensorinformationen der ersten Quelle basieren, von der Vorrichtung umfasst.

Ein Sensordatenerfassungs-Bauteil kann vielfältige Sensordaten verarbeiten. Dies kann die Roh-Sensor-Daten unmittelbar angeschlossener Sensoren umfassen, die lokal am Fahrzeug angeordnet sind. Dabei kann das eigene Fahrzeug als eine erste Quelle gelten. Ausführungsformen der angeschlossenen Sensoren können verschiedene Sensortypen wie Radar, Kamera und Lidar umfassen. Es können auch mehrere Sensoren gleichen Typs angeschlossen sein, die zum Beispiel verschiedene Raumsegmente im Fahrzeugumfeld erfassen. Diese verschiedenen Sensordaten können sich in Übertragungsgeschwindigkeit, Datenvolumen und Taktrate wesentlich unterscheiden.

Weitere Sensordaten können von einer zweiten Quelle empfangen werden, die außerhalb des eigenen Fahrzeugs lokalisiert ist. Allerdings ist diese zweite Quelle nicht auf ein weiteres Fahrzeug beschränkt, sondern kann Sensordaten verschiedener Fahrzeuge und auch von Infrastruktur umfassen. Diese Sensordaten der zweiten Quelle können zum Beispiel über die V2X-Schnittstelle im Fahrzeug empfangen werden, die auch den Status von sendenden Fahrzeugen beschreiben kann. Bekannte Parametersätze zur Statusbeschreibung sind die CAM- und die DENM-Daten, die oben bereits eingeführt wurden.

Darüber hinaus können über die V2X-Schnittstelle auch Sensordaten empfangen werden, die auf die lokale Umgebung von Fahrzeugen oder von Infrastruktur mit Blick auf die Fahr- oder Umgebungssituation, also zum Beispiel auf die Fahrbahn, entstanden sind. Dies kann zum Beispiel die Sensor-Roh-Daten der fernen Sensoren umfassen. Weiter können hier nur solche Sensor-Roh-Daten empfangen werden, die zu beim Sender erkannten Objekten zuzuordnen sind. Dabei kann die Objekterkennung beim Sender auch die Existenzwahrscheinlichkeit der erkannten Objekte bei der Auswahl der zu sendenden Sensordaten berücksichtigen. Zusätzlich oder an Stelle der genannten Sensor-Roh-Daten können die Sensordaten der lokalen Umgebung des Senders auch Objektinformationen umfassen, die mit den lokal erzeugten Objektdaten der hier beschriebenen Vorrichtung oder des oben beschriebenen Verfahrens vergleichbar sind. Diesen Objektdaten können dem zu Folge auch eine Existenzwahrscheinlichkeit, eine prognostizierte zeitliche Existenzdauer des Objektes, veränderte Sensordaten und auch zusammengeführte Daten umfassen.

Das Sensordatenerfassungs-Bauteil kann diese Daten entgegennehmen, gegebenenfalls vorverarbeiten und sie zum Beispiel in einer Datenwolke oder in Auswertungsstrukturen nach Sensortyp und/oder nach Quellen geordnet für die weitere Verarbeitung zur Verfügung stellen.

Bestimmungs-Komponenten dienen der Bestimmung zu identifizierender Objekte basierend auf den Sensordaten. Dabei können die Bestimmungs-Komponenten eine Sensor-Roh-Daten-Datenbank umfassen, in der die empfangenen Sensordaten unverändert und identifizierbar abgelegt werden. Dies kann unabhängig von der Empfangsquelle geschehen und auch unabhängig von Status- oder Umgebungsinformationen empfangener Sensordaten. Darüber hinaus können die Sensordaten in ein gemeinsames Datenformat umgewandelt werden. Weiter können die Sensordaten einem gemeinsamen Koordinatensystem zugeordnet werden, wobei zumindest ein lokales und ein globales Referenzsystem zur Verfügung stehen. Diese so oder auch anders modifizierten Sensordaten können in einer zweiten Datenbank abgelegt werden und ebenfalls identifizierbar sein. Anschließend können die in ein Datenformat umgewandelten und/oder in dem Koordinatensystem lokalisierten Daten einer Verarbeitungseinheit zugeführt werden, die die Objekterkennung durchführt. Dabei werden beispielsweise die Sensordaten mit bereits erkannten Objekten zusammengeführt oder neue Objekte ermittelt, die ebenfalls in einer weiteren Datenbank abgelegt werden können. Objekte ohne aktuelle Sensordaten können nach einer vorgegebenen Zeit gelöscht werden. Objekte können auch zusammengelegt werden, wenn neuere Sensordaten dies ergeben. Die Bestimmungs-Komponenten können darüber hinaus noch eine Zuordnungsmatrix zur Verfügung stellen, die der Zuordnung von Objekten, veränderten und zusammengeführten Sensordaten und Sensor-Roh-Daten dient.

Selektionsbauteile können auf die verschiedenen Datenbanken zugreifen und zum Beispiel zugehörige Sensor-Roh-Daten den erkannten Objekten zuordnen. Weiter können alternativ oder ergänzend Selektionsbauteile den erkannten Objekten auch veränderte Sensordaten und zusammengeführte Sensordaten zuordnen, mit deren Hilfe die Objekte identifiziert beziehungsweise Objekteigenschaften verändert wurden. Dazu können sich die Selektionsbauteile auch der Zuordnungsmatrix bedienen, die von den Bestimmungs-Komponenten bereitgestellt wird.

Schnittstellen zur Bereitstellung des zu identifizierenden Objekts und von Informationen, die auf dem selektierten Sensorinformationen der ersten Quelle basieren, stellen Daten für die weitere Verarbeitung in nachgeordneten Fahrzeugsystemen bereit, die als Prozessorsysteme ausgeführt sein können. Die Schnittstellen können mit Speicherelementen zur Speicherung der bereitzustellenden Daten ausgestattet sein. Dabei können Daten zur Verfügung gestellt werden, die erkannten Objekten zugeordnete Sensor-Roh-Daten zuweisen. Diese können auf lokal erzeugte Sensor-Roh-Daten beschränkt sein, um eine Verfälschung der eigenen Sensor-Roh-Daten mit Sensor-Rohdaten anderer Fahrzeuge auszuschließen. Die zugeordneten Objekte können - im Gegensatz dazu - aber mit Hilfe aller zur Verfügung stehenden Daten identifiziert und parametrisiert werden.

Es können zusätzlich oder alternativ weitere Daten zur Verfügung gestellt werden, die die veränderten Sensordaten und/oder fusionierte Sensordaten umfassen. Auch diese Daten können den erkannten Objekten zugeordnet sein.

Die Schnittstellen können dabei als eine Verbindungseinheit zu den nachfolgenden Verarbeitungseinheiten ausgeführt sein, wobei die Verbindungseinheit an ein fahrzeuginternes Bussystem gekoppelt sein kann. Es kann auch als Steck- oder anderweitige Verbindung zwischen der Vorrichtung und den nachfolgenden Systemen ausgeführt sein. Die Schnittstellen können auch als Verbindungen auf einer Leiterplatte ausgeführt sein zwischen Bauteilen, die einerseits der beschriebenen Vorrichtung und andererseits den nachfolgenden Systemen zugeordnet sind.

Optional können Ausführungsformen Bestimmungs-Komponenten umfassen, die ausgebildet sind zur Bearbeitung der Sensordaten, was die zeitliche Abstimmung der Sensordaten und/oder die Bestimmung von Objekten und/oder die Zusammenführung von Sensordaten umfasst.

Die zeitliche Abstimmung von Sensordaten kann der Zuordnung der Sensordaten zu bestimmten Verarbeitungsabschnitten dienen. Solche Verarbeitungsabschnitte werten die vorhandenen Daten eines bestimmten Zeitabschnitts aus. Diese Auswertung umfasst auch die Objektbestimmung für diesen Zeitabschnitt sowie die genannten Veränderungen und Zusammenführungen der Sensordaten. Eine typische Dauer eines Verarbeitungsabschnittes kann bei 200 Millisekunden liegen, wobei auch kürzere und längere Dauern realisiert sein können.

Die Zusammenführung der Sensordaten im Rahmen der Objektbildung sucht zu potentiellen oder bereits in vorhergehenden Verarbeitungsabschnitten identifizierten Objekten passende Sensordaten. Diese werden entweder den Objekten ergänzend zugeordnet. Alternativ können auch aus verschiedenen Sensordaten fusionierte Sensordaten gebildet werden, die dann als fusionierter Sensordatensatz dem Objekt zugeordnet werden. Können Sensordaten keinem potentiellen oder identifizierten Objekt zugeordnet werden, kann ein neues potentielles Objekt kreiert werden. Dabei können erkannte oder potentielle Objekte für eine vorgegebene Zeitdauer als existent angenommen werden. Darüber hinaus kann eine Sensordaten-Zuordnungsmatrix erzeugt werden für spätere weitere Zuordnungen.

In Ausführungsbeispielen können die Selektions-Komponenten eine erste Datenbank umfassen zur Ablage der Sensor-Roh-Daten und/oder eine zweite Datenbank umfassen zur Ablage der zu identifizierenden Objekte.

Datenbanken sind zur Verwaltung von Informationen geeignet, bei denen große Datenmengen effizient, widerspruchsfrei und dauerhaft zu speichern sind und benötigte Teilmengen in unterschiedlichen, bedarfsgerechten Darstellungsformen für Anwendungsprogramme bereitzustellen sind. Eine Datenbank zur Ablage der Sensor-Roh-Daten kann dabei mit einer Datenbank der identifizierten Objekte derart in Verbindung stehen, dass zum Beispiel über gemeinsame Zuordnungsangaben in beiden Datenbanken eine Zuordnung von Sensor-Roh-Daten zu den Objekten möglich ist.

Optional können Ausführungsbeispiele Kraftfahrzeuge mit einer oben beschriebenen Vorrichtung umfassen.

Kraftfahrzeuge können dabei alle bekannten Arten von Kraftfahrzeugen umfassen, also Lastkraftwagen in verschiedensten Größen, Busse zur Personenbeförderung, Personenkraftwagen, Motorräder und Motorroller. Diese können mit Verbrennungsmotoren und/oder elektrischem Antrieb ausgestattet sein, wobei letzterer aus einer Batterie und/oder aus Wasserstoff seine elektrische Energie bezieht.

Einige beispielhafte Ausführungsbeispiele der vorliegenden Erfindung werden nachfolgend bezugnehmend auf die beiliegenden Figuren näher erläutert. Es zeigen:
Fig. 1 zeigt ein erfindungsgemäßes Verfahren
Fig. 2 zeigt ein Fahrzeug, in dem lokale Sensoren angeordnet sind und Sensorinformationen einer zweiten Quelle
Fig. 3 zeigt eine Struktur eines Objekts
Fig. 4 zeigt eine Struktur eines Datenfeldes
Fig. 5 zeigt ein Prinzipschaltbild einer erfindungsgemäßen Vorrichtung
Fig. 6 zeigt ein verfeinertes Prinzipschaltbild der erfindungsgemäßen Vorrichtung
Fig. 7 zeigt verschiedene Verkehrssituationen mit und ohne V2X-Kommunikation
Fig. 8 zeigt ein Beispiel einer detaillierteren Struktur des Datenfeldes

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

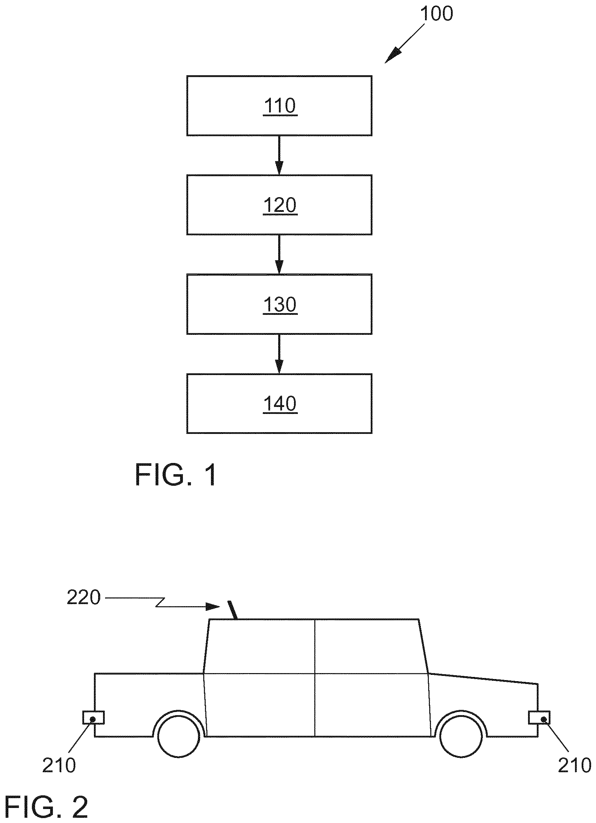

Die Fig. 1 zeigt ein Verfahren 100 zur Charakterisierung von zu identifizierenden Objekten. Dabei wird in einem ersten Schritt 110 eine Erfassung von Sensordaten, die eine erste Quelle von Sensorinformation und eine zweite Quelle von Sensorinformation umfassen, durchgeführt. Im nächsten Schritt 120 wird zumindest ein zu identifizierendes Objekt bestimmt, basierend auf den Sensordaten. Im folgenden Schritt 130 wird eine Selektion derjenigen Sensorinformation der ersten Quelle, die dem zu identifizierenden Objekt zugeordnet ist, durchgeführt. Im Schritt 140 wird dann eine Charakterisierung des zu identifizierenden Objekts mittels Informationen, die auf den selektierten Sensorinformationen der ersten Quelle basieren, durchgeführt.

Die Fig. 2 zeigt lokale Sensoren 210, die beispielhaft an einem Fahrzeug angeordnet sind und Sensor-Roh-Daten als Sensorinformationen bereitstellen. Weiter werden von dem Fahrzeug Sensorinformationen von fernen Sensoren 220 empfangen. Die lokalen Sensoren erfassen das Umfeld des Fahrzeugs. Die Sensorinformationen der fernen Sensoren erfassen den Status anderer Fahrzeuge und/oder Umfelder von Fahrzeugen oder Infrastruktur.

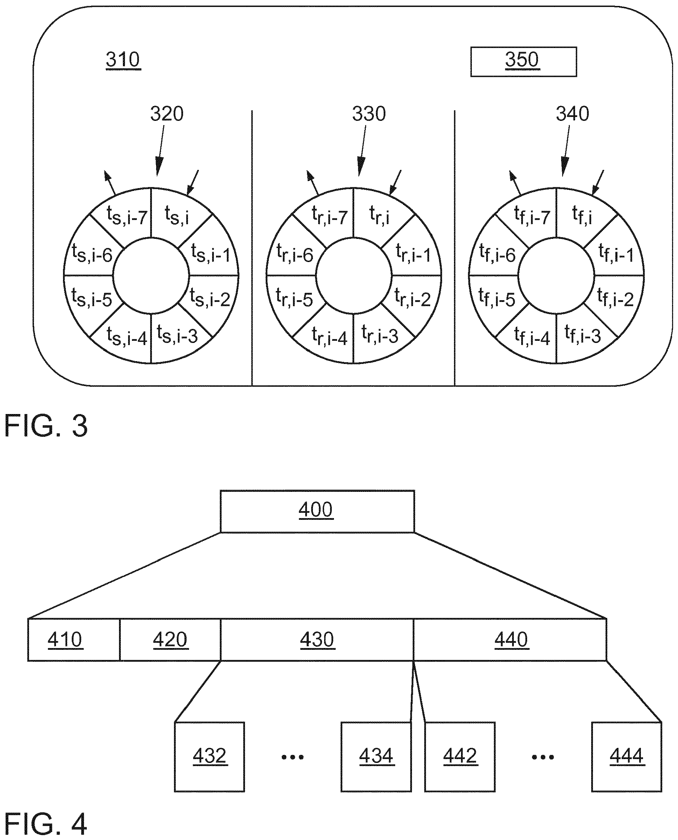

Fig. 3 zeigt eine Objektstruktur 310, die für jedes identifizierte Objekt angelegt werden kann. Dabei sind dem Objekt zugeordnete Sensordaten 320 und 330 gezeigt. Weiter sind zusammengeführte Daten 340 gezeigt, die auf Sensordaten basieren und ebenfalls dem Objekt zugeordnet sind. Alle Daten 320, 330 und 340 sind zu verschiedenen aufeinanderfolgenden Zeitpunkten erhoben und jeweils in einem zirkulären Speicher abgelegt. Im gezeigten Beispiel überschreibt dabei der achte Eintrag im zirkulären Puffer den ältesten Eintrag, sodass immer die letzten acht Einträge zur Verfügung stehen. Darüber hinaus sind weitere Daten 350 dem Objekt zugeordnet. Diese können die Existenzwahrscheinlichkeit, die geplante Objektlebenszeit (Time Out) und weitere objektbezogene Daten umfassen.

Fig. 4 zeigt ein Datenfeld 400, das über eine Luftschnittstelle empfangen werden kann. Dieses Datenfeld 400 enthält Daten vom Fahrzeugumfeld ferner Fahrzeuge oder von Infrastruktur. Sie werden bei der lokalen Objekterkennung berücksichtigt. Das Datenfeld 400 umfasst dabei ein Header 410, der zum Beispiel als Standard ITS-S (Intelligent Transport Systems-Station) ausgebildet sein kann in Anlehnung an ETSI TS 102 894-2. Er dient zur Identifizierung des Datenfeldes 400. Anschließend kann ein Beschreibungsfeld 420 angeordnet sein, das eine Identifikation des sendenden Fahrzeugs und/oder eine Position des Fahrzeugs und/oder einen Abstand des Fahrzeugs und/oder eine Geschwindigkeit des Fahrzeugs und/oder eine Beschleunigung des Fahrzeugs und/oder zumindest eine Eigenschaft der lokalen Sensoren des Fahrzeugs umfassen kann. Im folgenden dynamischen Objekt-Container 430 können die dynamischen Objekte übermittelt werden. Im anschließenden statischen Objekt-Container 440 können die statischen Objekte übermittelt werden. Ein dynamisches Objekt 432, 434 kann Sensorinformation der ersten Quelle und/oder eine Lokalisierungsinformation, die eine lokale oder eine globale Bezugsgröße enthält und/oder Dynamikangaben zur Beschreibung der Objektdynamik und/oder eine Klassifikation des Objekts und/oder eine geschätzte geometrische Dimensionen des Objekts umfassen. Ein statisches Objekt 442, 444 kann Sensorinformation der ersten Quelle und/oder eine Lokalisierungsinformationen und/oder eine Klassifikation des Objekts und/oder eine geschätzte geometrische Dimensionen des Objekts oder ein Belegungsgitter (occupancy grid) eines Erfassungsraumes umfassen.

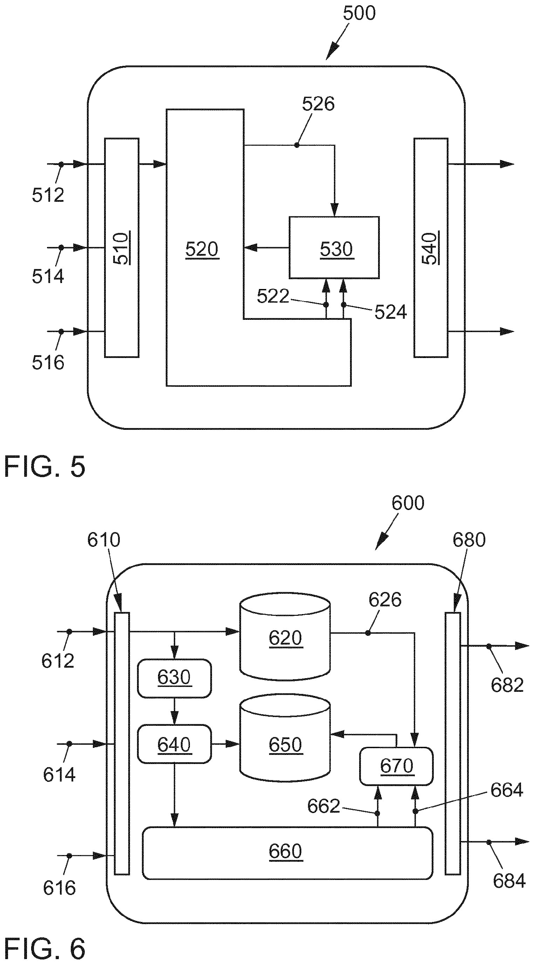

Fig. 5 zeigt eine Vorrichtung 500 zur Charakterisierung von zu identifizierenden Objekten. In der Vorrichtung 500 sind Sensordatenerfassungs-Komponenten 510 zur Erfassung von Sensordaten, die eine erste Quelle 512 von Sensorinformation und eine zweite Quelle 514, 516 von Sensorinformation umfassen. Dabei ist die erste Quelle 512 die Sensorinformation der fahrzeugeigenen Sensordaten und die zweite Quelle sind Sensorinformationen von anderen Fahrzeugen oder von Infrastruktur. Die Sensordaten werden an Bestimmungs-Komponenten 520 weitergeleitet zur Bestimmung zumindest eines zu identifizierenden Objekts basierend auf den Sensordaten. Die Bestimmungs-Komponenten 520 umfassen auch eine Objekt-Datenbank. Anschließend werden Selektions-Komponenten 530 Daten einer Zuordnungsmatrix 522 sowie zusammengeführte Objekte 524 zugeführt zur Selektion derjenigen Sensorinformation der ersten Quelle, die dem zu identifizierenden Objekt zugeordnet sind. Dazu beziehen die Selektions-Komponenten Sensorinformationen der ersten Quelle 526 aus den Bestimmungs-Komponenten 520. Die Objekt-Datenbank der Bestimmungs-Komponenten 520 wird von den Selektions-Komponenten 530 aktualisiert zur Zuordnung von zusammengeführten Objekten mit bereits existierenden Objekten. Anschließend werden der Schnittstelle 540 Daten zur Bereitstellung des zu identifizierenden Objekts und von Informationen, die auf den selektierten Sensorinformationen der ersten Quelle basieren, bereitgestellt.

Fig. 6 zeigt eine weitere Detaillierung der Vorrichtung. Dabei entsprechen die Sensordaten 612-616 den Sensordaten 512-516. Die Sensordatenerfassungs-Komponenten 610 leiten die Sensordaten an eine Datenbank mit Sensor-Roh-Daten 620 und an ein Datenformat-Modul 630 weiter, bei dem ein gemeinsames Datenformat für die Sensordaten erzeugt wird. Diese Daten erreichen die Objekt-Relativierung 640, die ein lokales Referenzsystem für alle Daten erzeugt. Anschließend werden die so modifizierten Daten in der Objektdatenbank 650 und in dem Modularen Umfeld Darstellungsrahmen 660 abgelegt. Letzterer liefert dann eine Assoziationsmatrix 662 und erkannte Objekte 664 an das Datenzusammenführungs-Modul 670, das auch mit Sensorinformationen der ersten Quelle (Sensor-Roh-Daten) 626 gespeist wird. Das Datenzusammenführungs-Modul 670 speist die Objektdatenbank 650 zur Zuordnung von zusammengeführten Objekten mit bereits existierenden Objekten. Somit liegt eine Verknüpfung von erkannten Objekten und lokalen Sensor-Roh-Daten vor. Eine Schnittstellen 680 stellt nun die identifizierenden Objekte 684 und Informationen, die auf den selektierten Sensorinformationen der ersten Quelle 682 basieren zur weiteren Verarbeitung durch nachfolgende Systeme bereit.

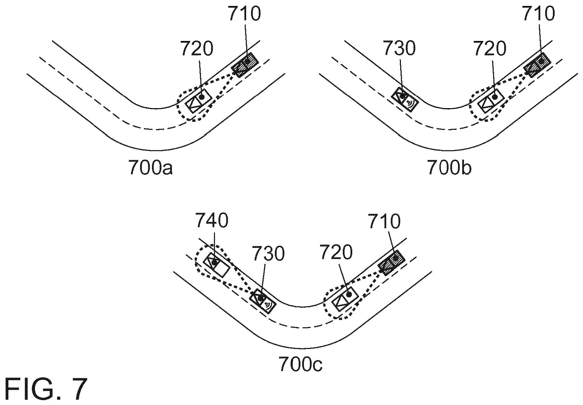

Fig. 7 wird im Zusammenhang mit der folgenden Zusammenfassung beschrieben.

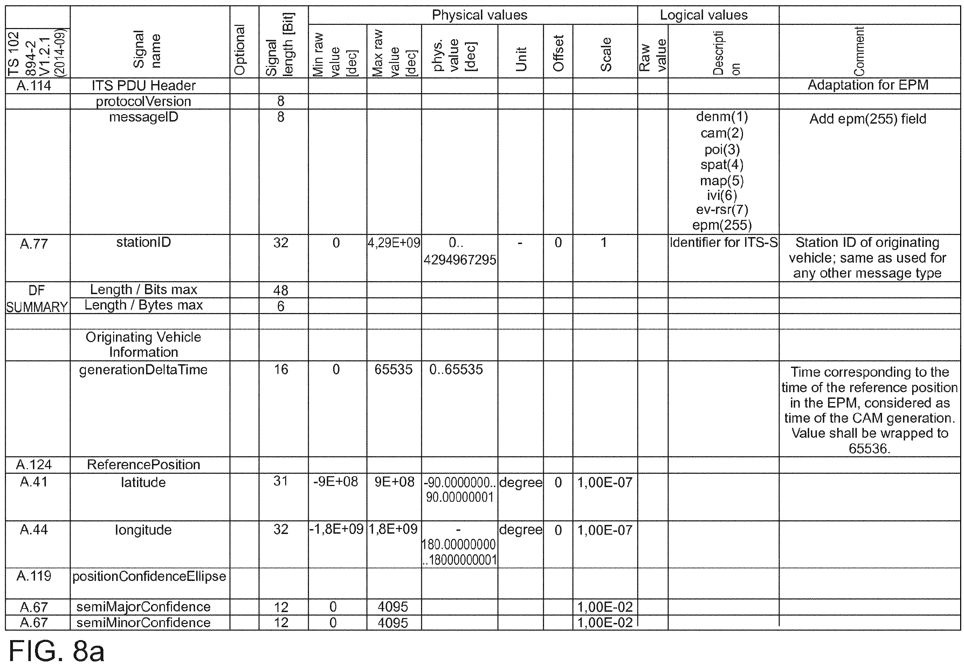

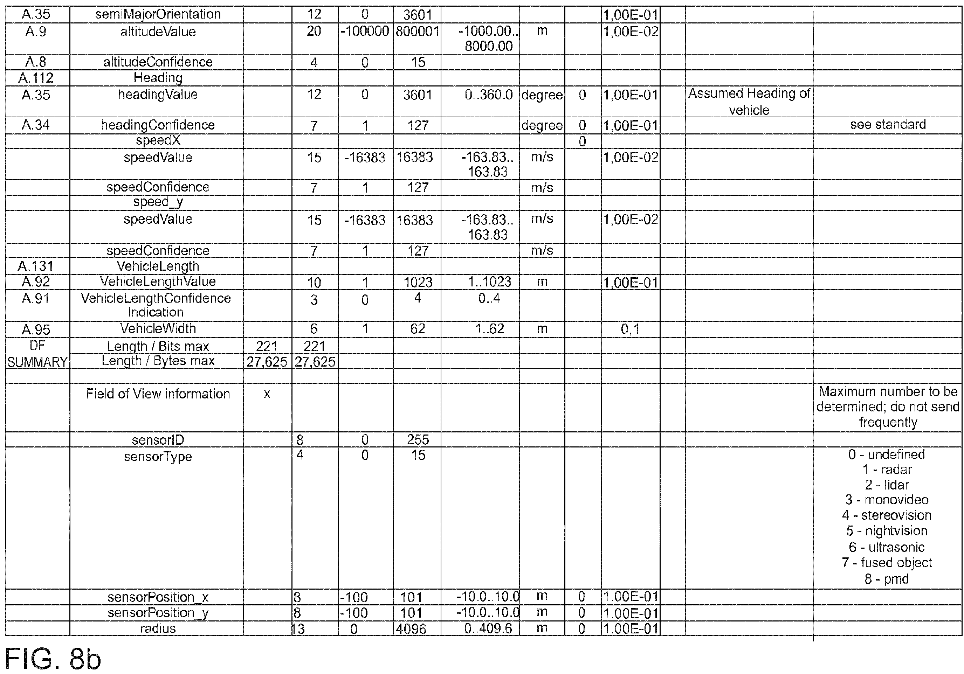

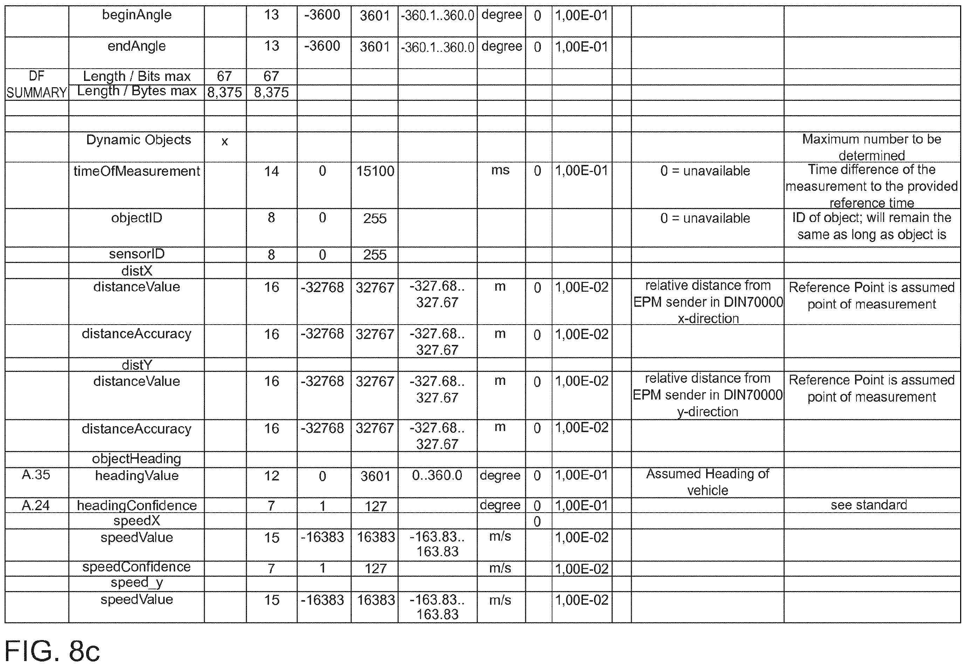

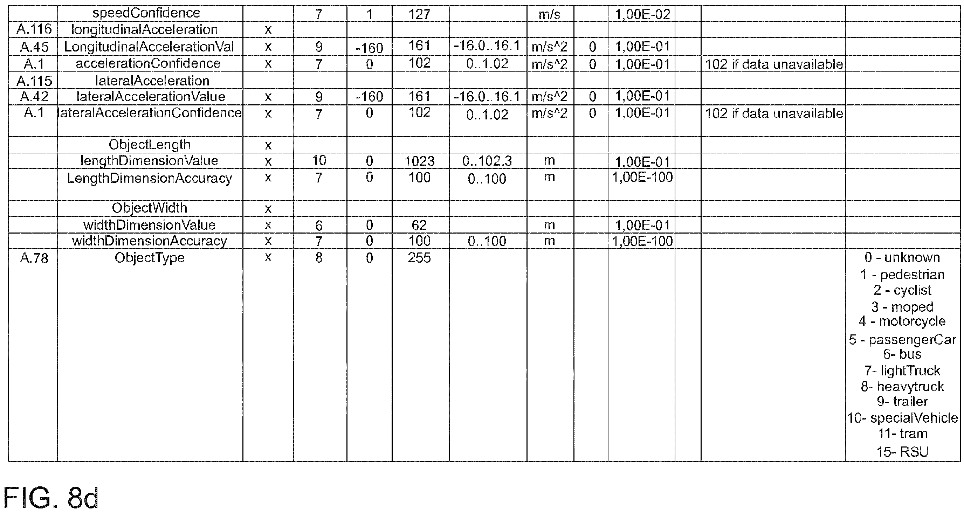

Fig. 8a-d zeigt ein Beispiel einer detaillierteren Struktur eines Datenfeldes zur V2X-Kommunikation mit einer Vielzahl von Parametern. Es ist in Anlehnung an die ETSI TS 894-2, V1.2.1 (2014-09) erstellt. Das Datenfeld beginnt mit einem Header (A.114, ITS PDU Header) mit genereller Information und der Nachrichten- und Fahrzeug/Infrastruktur-Identifikation (A.77).

Als nächstes Feld schließt sich optional die Information des sendenden Fahrzeugs an. (Originating Vehicle Information - A.95). Dies umfasst in Ausführungsbeispielen seine Position (A.124, Reference Position), seine Ausrichtung bzw. Himmelsrichtung (A.112, Heading), seine Geschwindigkeit (speedX - speed confidence) sowie seine Länge und Breite (A.131-A95, VehicleLength - VehicleWidth).

Es schließen sich optional Felder mit Sensorbeschreibungen an (sensorID - endAngle), in dem die relevanten Sensoren und Ihre Ausgestaltung beschrieben werden. Beispielhaft ist das für einen Sensor gezeigt.

Weiter folgt optional das Feld der dynamischen Objekte (Dynamic Objects - A.78, ObjectType), das in seinem Aufbau dem Feld der Information des sendenden Fahrzeugs ähneln kann. Zusätzlich umfasst das Feld optional Zeitangaben (timeOfMeasurement), die auf den Zeitunterschied zwischen Messung und Versendung der Daten hinweist. Weiter umfasst es in Ausführungsbeispielen ein Feld zur Angebe des ermittelten Objekttyps (A.78, ObjectType), der die üblichen Verkehrsteilnehmer-Typen umfasst.

Es kann sich noch ein Feld für statische Objekte anschließen (nicht gezeigt), in dem zum Beispiel Infrastruktur beschrieben wird.

Die nähere Ausgestaltung der jeweiligen Parameter ist im Kopf der Fig. 8a aufgeführt. Sie kann pro Parameter den Signalnamen, Feldstärke, physikalische und logische Werte der Parameter umfassen. Einzelne Parameterwerte können auf Bereiche oder Werte limitiert sein. Somit kann deren Kompatibilität beim Austausch mit anderen Fahrzeugen oder Infrastruktur sichergestellt werden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Eine programmierbare Hardwarekomponente, die als Sensordatenempfänger, als Bestimmungsbauteil, als Selektionsbauteil oder als Schnittstelle realisierbar ist, kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Die Erfindung kann wie folgt zusammengefasst werden:
Es wird eine Identifizierung von Objekten im Fahrzeugumfeld gezeigt, bei denen eine Objektermittlung mit Hilfe eigener und fremder Fahrzeugsensoren erfolgt, während die Charakterisierung der erkannten Objekte sich auf die eigenen Sensordaten stützt.

Die meisten der heutigen Fahrerassistenzsysteme beziehen sich auf lokale Sensoren. Mit der Einführung von Fahrzeug-zu-X (V2X) Kommunikation wird die Wahrnehmungsgrenze der nächsten Generation von Fahrzeugen weiter ausgedehnt werden. Da die Technologie auf der Gegenwart anderer Kommunikationspartner beruht (Netzwerk Effekt), soll jede Maßnahme zur Steigerung der Marktdurchdringung betrieben werden. Ausführungsbeispiele führen ein Konzept der kollektiven Wahrnehmung ein, das darauf abzielt, Objekte zu erkennen, die mit Hilfe lokaler Wahrnehmungssensoren erfasst werden in Ergänzung zu den angekündigten Selbstbekanntmachungsprozeduren der V2X beherrschenden Fahrzeuge.

Gegenwärtige Standardisierungsbemühungen für V2X-Kommunikation zielen auf die Bekanntmachung von Fahrzeugen im Netzwerk. Deshalb sind mit V2X ausgestattete Fahrzeuge in der Lage, einander über die Sichtverbindung hinaus wahrzunehmen und so die Wahrnehmungsgrenze jedes Fahrzeugs zu vergrößern. Da selbst veröffentlichende (also V2X nutzende) Fahrzeuge ihr internes Sensor-System benutzen (zum Beispiel den Beschleunigungssensor, et cetera), umfasst der Nachrichtenaustausch umfassendere Informationen über den dynamischen Status der Fahrzeuge, als wenn Messungen von einem anderen Fahrzeug mit seinen lokalen Wahrnehmungssensoren durchgeführt werden (zum Beispiel Radar, Kamera, et cetera). Der Nachteil dieser Technologie - wie für jede Kommunikationstechnologie, die auf einer Netzwerkpräsenz beruht - ist der so genannte Netzwerk-Effekt: Ein Minimum an Nutzern, die so genannte kritische Masse, ist notwendig für messbare Erfolge bei Nutzung dieser Technologie.

Die grundlegende Idee von Ausführungsbeispielen ist es, lokale Wahrnehmungssensoren bei Fahrzeugen mit V2X zu nutzen, um virtuell die Durchdringungsrate dieser Technologie zu verbessern durch zusätzliche Verbreitung von Daten der von den Fahrzeugen wahrgenommenen lokalen Wahrnehmungssensoren der V2X benutzenden Fahrzeuge. Insbesondere während der Markteinführung der V2X-Kommunikation, wenn nur eine kleine Anzahl von Fahrzeugen V2X-fähig ist, kann das Prinzip der virtuellen Wahrnehmung zu einer zunehmenden Akzeptanzrate der V2X-Technologie führen.

Mit der Einführung der V2X-Technologie und den avisierten bisherigen Maßnahmen können viele Fahrerassistenzsysteme verbessert werden, da die Wahrnehmungsreichweite der Fahrzeuge erheblich verbessert wird. Dies erlaubt den Austausch von Informationen, die schwierig zu ermitteln sind bei üblichen Umfeldwahrnehmungssensoren, wie zum Beispiel die Rolle des Fahrzeugs im Verkehr (zum Beispiel ein Notfallfahrzeug), die Anzahl der Passagiere sowie die Masse und die geometrischen Dimensionen des Fahrzeugs. Für diesen Zweck enthalten die periodisch gesendeten Allgemeinen Wahrnehmungsnachrichten (Coorporate Awareness Messages (CAM)) Informationen über die Position und den dynamischen Status des übertragenden Fahrzeugs. CAM wurde in ETSI EN 302 637-2 V1.3.1 oder V1.3.2 standardisiert. Warnungen und Informationen über Gefahren können über dezentralisierte Umfeldnachrichten (Decentralized Environmental Notification Message (DENM)) übertragen werden, die auch dezidierte Routing-Algorithmen nutzen können (zum Beispiel Multi-Hop und gezielter geografischer Sendung) zur Erzielung priorisierter Verbreitung. DENM wurde in ETSI EN 302 637-3 V1.2.1 standardisiert.

Ein Austausch von Sensorinformationen zwischen Teilnehmern auf der Straße erlaubt eine weitere Ausdehnung des Sichtfeldes der V2X-fähigen Fahrzeuge, da sie andere Fahrzeuge innerhalb der Reichweite wahrnehmen werden wie auch deren lokal wahrgenommene Objekte. Figur 7, 700a zeigt die Objekte (Fahrzeuge) 720 innerhalb der Wahrnehmungsreichweite der lokalen Sensoren für das eigene Fahrzeug 710. Seine Wahrnehmungsreichweite ist begrenzt auf die gegenwärtigen Sichtlinien der Sensoren. Mit Einführung der V2X-Technologie wird die Wahrnehmung über die Sichtlinie hinaus erweitert und andere Fahrzeuge 730 werden dem eigenen Fahrzeug 710 bekannt, wie in Fig. 7, 700b dargestellt. Bei Realisierung des Prinzips der kollektiven Wahrnehmung gewinnt das eigene Fahrzeug zusätzliches Wissen über nicht mit V2X ausgestattete Fahrzeuge 740 innerhalb der Wahrnehmungsgrenzen von mit V2X ausgestatteten Fahrzeugen, wie in Fig. 700, 700c dargestellt ist.

Je mehr Objekte dem eigenen Fahrzeug bekannt sind, umso besser ist das Verständnis des eigenen Fahrzeugs von seiner Umgebung. Insbesondere in Situationen mit niedriger Durchdringungsrate erlaubt der Austausch lokal wahrgenommener Objekte zwischen V2X-fähigen Fahrzeugen die Entwicklung eines neuen Fahrerassistenzsystems. Darüber hinaus werden bestehende Systeme verbessert. Mit Hilfe des erweiterten Sichtfeldes des Fahrzeugs kann zum Beispiel der Anwendungsbereich von Blindfleckenerkennungssystemen ausgeweitet werden für unklare Sichtfeld-Situationen wie die einer Kurve. Darüber hinaus werden kreuzende Fahrzeuge dem eigenen Fahrzeug bekannt, solange andere V2X-Fahrzeuge eine Sichtverbindung in die verbundenen Straßen einer Kreuzung haben.

Die Basis für lokale Wahrnehmungssysteme ist ein Umfeldmodell der Objekte in der Nähe des Fahrzeugs. Das Umfeldmodell arbeitet als Datenbasis für alle Objekte, die durch das Fahrzeug wahrgenommen werden können, unabhängig von der Empfangsquelle. Immer, wenn eine neue Messung (Messwerte eines Wahrnehmungssensors) durchgeführt wird, wird diese Messung entweder zusammengeführt mit den bereits existierenden Objekten im Umfeldmodell oder ein neues Objekt entsteht. Jedes Objekt in der Datenbasis besteht nur für eine begrenzte Zeit. Immer, wenn ein Objekt des Umfeldmodells durch das wahrnehmende Fahrzeug innerhalb einer vorgegebenen Zeit nicht wieder wahrgenommen wurde, wird das Objekt entfernt.

Das V2X-Objekte bereithaltende Umfeldmodell umfasst einen Modularen-Umfeld-Darstellungsrahmen (MERF (Modular Environmental Representation Framework)) 660. Dieser ist verantwortlich für die Verarbeitung aller Sensor-Roh-Daten. Seine Hauptaufgabe ist die zeitliche Angleichung aller Messungen, die Vorhersage von Objekten in seiner Datenbasis und die Zusammenführung von Sensordaten. Die grundsätzliche Architektur des Umfeldmodells und seiner Schnittstellen zu Fahrzeugfunktionen sind in Fig. 6 dargestellt. Das Umfeldmodell 600 empfängt Sensor-Roh-Daten von den lokalen Wahrnehmungssensoren, die CAM und DENM von der V2X-Schnittstelle wie auch eine Umfeld-Wahrnehmungsnachricht (Environmental Perception Message (EPM)), die später weiter detailliert wird. Die Daten werden für die spätere Benutzung in der Sensor-Roh-Daten Datenbasis/Datenbank 620 gespeichert. Weiter werden die Sensor-Roh-Daten in ein gemeinsames Format verpackt im Verpackungsmodul 630. Abhängig von den Eingangsdaten müssen die Messungen auf ein lokales Koordinatensystem des Fahrzeugs referenziert werden, was im Objektrelativierungsmodul 640 durchgeführt wird. Nach diesem Modul sind alle Messungen auf dasselbe lokale Koordinatensystem referenziert und können deshalb im Modul Objekt-Datenbasis/Datenbank 650 gespeichert werden, die alle bekannten Objekte des Fahrzeugs bewahrt.

Zusätzlich werden die Objekte an den Modularen Umfeld-Darstellungsrahmen MERF 660 übertragen, der die temporäre Anpassung aller Messungen sowie die mögliche Datenzusammenführung mit bereits existierenden Objekten betreibt. Zu diesem Zweck beobachtet MERF die Objekte für eine begrenzte Zeitspanne. Nach dem Zusammenführungsschritt werden eine Assoziationsmatrix 662 und die zusammengeführten Objekte 664 an das Datenzusammenführungs-Modul 670 zurückgeführt. Dieses Modul ist verantwortlich für die Wiederzuordnung von zusammengeführten Objekten mit den bereits bestehenden Objekten in der Objekt Datenbasis/Datenbank 650. Das Umfeldmodell stellt zwei Schnittstellen für Fahrzeugfunktionen zur Verfügung. Die Schnittstelle für zusammengeführte Objekte erlaubt die Auswahl der zusammengeführten Sensordaten zur weiteren Verarbeitung in Funktionen von Fahrerassistenzsystemen. Die Schnittstelle für zugeordnete, unbearbeitete Messdaten erlaubt eine die Zuordnung der Sensor-Roh-Daten mit den zusammengeführten Sensorobjekten aus der Sensor-Roh-Daten Datenbasis/Datenbank 620 für die weitere Bearbeitung.

Jedes Objekt der Objekt-Datenbasis/Datenbank 650 des Umfeldmodells, beschreibt die temporären-räumlichen Eigenschaften eines wahrgenommenen Objektes. Für diesen Zweck besteht jedes Objekt in der Datenbasis/Datenbank 650 aus einem (zirkulären) Speicher für jeden Sensortyp σ mit Messungen *t_{σ,i}* für die Objekte zu einem bestimmten Zeitpunkt *i,* wie in Fig. 3 dargestellt. Die Größe jedes Speichers kann variiert werden gemäß den Eigenschaften des zugeordneten Sensors. Zusätzlich zu den dem Sensor zugeordneten Speichern 320, 330 speichert ein weiterer Speicher die zusammengeführten Objekte 340. Das Datenzusammenführungs-Modul 670 hat Zugang zu diesem Speicher, um die zusammengeführten Sensordaten 340 dem Objekt in der Objekt-Datenbasis/Datenbank 650 zuzuordnen.

Eine Umfeldwahrnehmungsnachricht EPM (Environmental Perception Message (EPM)) ist der Kern des Prinzips der kollektiven Wahrnehmung. Figur 4 zeigt die Grundstruktur der Nachricht und empfiehlt einige Datenfelder in der Nachricht zur Benutzung. Der Zweck der EPM ist die Etablierung eines Mechanismusses zur Veröffentlichung von Information über die lokal wahrgenommenen Objekte in dem mobilen Ad-Hoc-Netzwerk. Der Standard ITS PDU (Protocol Data Unit) Header der ETSI TS 102 894-2 soll benutzt werden, wie in der ETSI 102 894-2 definiert, um den existierenden Standards zu entsprechen.

Das Beschreibungsfeld 420 enthält Informationen über die sendende ITS-Station der EPM. Diese Information besteht aus Datenfeldern wie Stationsidentität (ID), Abstand, Geschwindigkeit, Beschleunigung, et cetera. Dieses Datenfeld kann von der empfangenden ITS-Station benutzt werden, um eine EPM den Objekten des Umfeldmodells zuzuordnen. Des Weiteren ist diese Information redundant zu den Informationen, die bereits mit CAM übertragen wurden. Dieses erhöht die Update-Rate der Daten der ITS-Station und verbessert so die Qualität der Datenvorhersage und des Zusammenführungsprozesses. Darüber hinaus enthält der Container auch Informationen über die lokalen Sensoreigenschaften (zum Beispiel Reichweite und Öffnungswinkel, wie vom Sensorhersteller spezifiziert) von der sendenden ITS-Station.

Der dynamische Objekt-Container 430 enthält Informationen über die wahrgenommene Dynamik (zum Beispiel die Bewegung) von Objekten, die durch die lokalen Wahrnehmungssensoren der sendenden ITS-Station erfasst wurden. Die Beschreibung der dynamischen Objekte basiert auf den Sensor-Roh-Daten, die in der Sensor-Roh-Daten-Datenbasis/Datenbank 620 gespeichert sind, siehe Fig. 6. Diese Methode reduziert die Fehlerausbreitung, wenn bereits zusammengeführte Objekte benutzt werden.

Die Auswahl der (dynamischen und statischen) Objekte wird in Abhängigkeit der Existenzwahrscheinlichkeit des Objektes übermittelt, die ihrerseits von der Anzahl der Wahrnehmungszyklen des betreffenden Objektes abhängt (zum Beispiel die Anzahl von Messungen, die einem Objekt in der Datenbasis zugeordnet werden können).

Die maximale Anzahl von dynamischen und statischen Objekten innerhalb der EPM drückt sich In den folgenden Obergrenzen aus:

| | |
|---|---|
| DYN_OBJ_MAX | maximale Anzahl dynamischer Objekte in der EPM |
| STAT_OBJ_MAX | maximale Anzahl statischer Objekte in der EPM |

Die Beschreibung dynamischer Objekte kann mit zwei verschiedenen Referenzrahmen beschrieben werden.
- Der lokale Referenzrahmen des sendenden Fahrzeugs: bei Benutzung von Sensor-Roh-Daten wird das lokale Koordinatensystem des sendenden Fahrzeugs benutzt zur Beschreibung der dynamischen Eigenschaften des wahrgenommenen Objekts.
- Der globale Referenzrahmen: Alternativ kann die Beschreibung in einer globalen Referenz erfolgen, wie in der ETSI TS 102 894-2 beschrieben ist.

In Ergänzung der dynamischen Eigenschaften des Objekts kann eine Klassifikation der sendenden ITS-Station bereitgestellt werden. Diese Klassifikation basiert auf einem Vorschlag gemäß ETSI TS 102 894-2, V1.2.1 (DE_Station Type).

Die Beschreibung statischer Objekte kann den gleichen Referenzrahmen benutzen, wie er für die Beschreibung der dynamischen Objekte benutzt wurde. Anstelle der Übertragung der erwarteten geometrischen Form des statischen Objekts kann ein Belegungsgitter (occupancy grid) eines Erfassungsraumes verwendet werden.

### Bezugszeichenliste

- 100: Verfahren zur Charakterisierung von zu identifizierenden Objekten
- 110: Erfassung von Sensordaten
- 120: Bestimmung eines Objekts
- 130: Selektion von Sensorinformation
- 140: Charakterisierung
- 210: lokale Sensoren mit Sensor-Roh-Daten
- 220: Sensorinformationen ferner Sensoren
- 310: zu identifizierende Objekte
- 320: zugeordnete Sensordaten
- 330: zugeordnete Sensordaten
- 340: zusammengeführte Sensordaten
- 350: zusätzliche Informationen der Objekte
- 400: Datenfeld
- 410: Header
- 420: Beschreibungsfeld
- 430: dynamischer Objekt-Container
- 432: dynamisches Objekt
- 434: dynamisches Objekt
- 440: statischer Objekt-Container
- 442: statisches Objekt
- 444: statisches Objekt
- 500: Vorrichtung
- 510: Sensordatenerfassungs-Komponenten
- 512: erste Quelle
- 514: zweite Quelle
- 516: zweite Quelle
- 520: Bestimmungs-Komponenten
- 522: Zuordnungsmatrix
- 524: zusammengeführte Objekte
- 526: Sensorinformationen der ersten Quelle
- 530: Selektions-Komponenten
- 540: Schnittstellen
- 600: Vorrichtung
- 610: Sensordatenerfassungs-Komponenten
- 612: erste Quelle
- 614: zweite Quelle
- 616: zweite Quelle
- 620: Sensor-Roh-Daten-Datenbank
- 626: Sensorinformationen der ersten Quelle
- 630: gemeinsames Datenformat
- 640: Objekt-Relativierung
- 650: Objekt-Datenbasis/Datenbank
- 660: Modularer Umfeld-Darstellungsrahmen
- 662: Assoziationsmatrix
- 664: Objekte
- 670: Datenzusammenführung
- 680: Schnittstelle
- 682: zugeordnete Sensor-Roh-Daten
- 684: zusammengeführte Objektdaten
- 700a: Reichweite der lokalen Sensoren
- 700b: zusätzlicher V2X-Empfang
- 700c: zusätzlicher Empfang lokaler Sensordaten über V2X
- 710: eigens Fahrzeug mit lokalen Sensoren
- 720: mit den lokalen Sensoren des eigenen Fahrzeugs erfasstes Fahrzeug
- 730: V2X sendendes Fahrzeug
- 740: bei V2X mit allgemeiner Wahrnehmung mit erfasstes Fahrzeug

## Patentansprüche

1. Verfahren (100) zur Charakterisierung von zu identifizierenden Objekten, umfassend
Erfassung (110) von Sensordaten aus einer ersten Quelle von Sensorinformation und einer zweiten Quelle von Sensorinformation;
Bestimmung (120) zumindest eines zu identifizierenden Objekts basierend auf den Sensordaten; wobei ein hierarchisches Modell zum Einsatz kommt, bei dem eine Datenwolke mit allen Sensordaten als Basis dient;
Selektion (130) derjenigen Sensorinformation der ersten Quelle, die dem zu identifizierenden Objekt zugeordnet ist;
Charakterisierung (140) des zu identifizierenden Objekts mittels Informationen, die auf den selektierten Sensorinformation der ersten Quelle basieren;
wobei die Charakterisierung des zu identifizierenden Objekts sich auf Sensordaten aus der ersten Quelle von Sensorinformation beschränkt;
wobei die erste Quelle von Sensorinformation ein lokaler Sensor eines Fahrzeugs ist (210) und Sensor-Roh-Daten zur Verfügung stellt, und wobei die zweite Quelle von Sensorinformation ein entfernter Sensor ist und über eine Schnittstelle Sensor-Nachrichten (220) zur Verfügung stellt, und
wobei zu identifizierende Objekte alle Gegenstände, Personen und Fahrzeuge sind, die sich im Fahrzeugumfeld aufhalten.

2. Verfahren (100) nach Anspruch 1, wobei der lokale Sensor das Umfeld des Fahrzeugs erfasst und der entfernte Sensor den Status zumindest eines weiteren Fahrzeug erfasst und/oder das Umfeld des zumindest einen weiteren Fahrzeugs erfasst und/oder eine Status-Erfassung als Cooperative Awareness Message -CAM- und/oder als Decentralized Environmental Notification Message -DENM- zur Verfügung stellt.

3. Verfahren (100) nach einem der vorherigen Ansprüche, wobei das Bestimmen des zu identifizierenden Objektes neben den dem identifizierten Objekt zugeordneten Sensordaten (320, 330) ferner auf zusammengeführten Daten basiert (340), welche auf einer Kombination von Sensor-Roh-Daten einer Mehrzahl von Sensoren basieren.

4. Verfahren (100) nach einem der vorherigen Ansprüche, wobei mit den identifizierten Objekten zusätzliche Informationen bereitgestellt werden, die eine Existenzwahrscheinlichkeit und/oder eine Existenzdauer des Objektes angeben.

5. Verfahren (100) nach einem der vorherigen Ansprüche, wobei im Fahrzeug (210) ein Datenfeld (400) über ein mobiles Netzwerk empfangen wird, wobei das Datenfeld (400) umfasst:
o ein Beschreibungsfeld (420), das eine Identifikation des weiteren Fahrzeugs und/oder eine Position des weiteren Fahrzeugs und/oder einen Abstand des weiteren Fahrzeugs und/oder eine Geschwindigkeit des weiteren Fahrzeugs und/oder eine Beschleunigung des weiteren Fahrzeugs und/oder zumindest eine Eigenschaft der lokalen Sensoren des weiteren Fahrzeugs umfasst; und/oder das Datenfeld weiter umfasst:
einen dynamischen Objekt-Container (430), der die Beschreibung zumindest eines dynamischen Objekts umfasst; und/oder das Datenfeld weiter umfasst
einen statischen Objekt-Container (440), der die Beschreibung zumindest eines statischen Objekts umfasst.

6. Verfahren (100) nach Anspruch 5, wobei der dynamische Objekt-Container (430) zumindest ein dynamisches Objekt (432, 434) umfasst, das seinerseits umfasst: Sensorinformation der ersten Quelle und/oder eine Lokalisierungsinformation, die eine lokale oder eine globale Bezugsgröße enthält und/oder eine Dynamikangabe zur Beschreibung der Objektdynamik und/oder eine Klassifikation des Objekts und/oder eine geschätzte geometrische Dimensionen des Objekts; und/oder wobei
der statische Objekt-Container (440) zumindest ein statisches Objekt (442, 444) umfasst, das seinerseits umfasst: Sensorinformation der ersten Quelle und/oder eine Lokalisierungsinformation und/oder eine Klassifikation des Objekts und/oder eine geschätzte geometrische Dimension des Objekts oder ein Belegungsgitter eines Erfassungsraumes.

7. Verfahren (100) nach einem der vorherigen Ansprüche, wobei im Fahrzeug (210) ein Datenfeld (400) über ein mobiles Netzwerk empfangen wird, wobei das Datenfeld (400) umfasst:
ein Beschreibungsfeld (420), das eine Identifikation des weiteren Fahrzeugs und eine Position des weiteren Fahrzeugs und einen Abstand des weiteren Fahrzeugs und eine Geschwindigkeit des weiteren Fahrzeugs und eine Beschleunigung des weiteren Fahrzeugs und zumindest eine Eigenschaft der lokalen Sensoren des weiteren Fahrzeugs umfasst; und das Datenfeld (400) weiter umfasst
einen dynamischen Objekt-Container (430), der die Beschreibung zumindest eines dynamischen Objekts umfasst (432, 434); und das Datenfeld (400) weiter umfasst
einen statischen Objekt-Container (440), der die Beschreibung zumindest eines statischen Objekts umfasst (442, 444), wobei
das dynamische Objekt (432, 434) seinerseits umfasst: Sensorinformation der ersten Quelle und eine Lokalisierungsinformation, die eine lokale oder eine globale Bezugsgröße enthält und eine Dynamikangabe zur Beschreibung der Objektdynamik und eine Klassifikation des Objekts und eine geschätzte geometrische Dimension des Objekts; und wobei
das statisches Objekt (442, 444) seinerseits umfasst: Sensorinformation der ersten Quelle und eine Lokalisierungsinformation und eine Klassifikation des Objekts und ein Belegungsgitter.

8. Vorrichtung (500) zur Charakterisierung von zu identifizierenden Objekten umfassend:
Sensordatenerfassungs-Komponenten (510) zur Erfassung von Sensordaten, die eine erste Quelle von Sensorinformation und eine zweite Quelle von Sensorinformation umfassen;
Bestimmungs-Komponenten (520) zur Bestimmung zumindest eines zu identifizierenden Objekts basierend auf den Sensordaten; wobei ein hierarchisches Modell zum Einsatz kommt, bei dem eine Datenwolke mit allen Sensordaten als Basis dient;
Selektions-Komponenten (530) zur Selektion derjenigen Sensorinformation der ersten Quelle, die dem zu identifizierenden Objekt zugeordnet sind;
Schnittstellen (540) zur Bereitstellung von Informationen über das zu identifizierende Objekt und von Informationen, die auf der selektierten Sensorinformation der ersten Quelle basieren; wobei die Charakterisierung des zu identifizierenden Objekts sich auf Sensordaten aus der ersten Quelle von Sensorinformation beschränkt;
wobei die erste Quelle von Sensorinformation ein lokaler Sensor eines Fahrzeugs ist (210) und Sensor-Roh-Daten zur Verfügung stellt, und wobei die zweite Quelle von Sensorinformation ein entfernter Sensor ist und über eine Schnittstelle Sensor-Nachrichten (220) zur Verfügung stellt, und
wobei zu identifizierende Objekte alle Gegenstände, Personen und Fahrzeuge sind, die sich im Fahrzeugumfeld aufhalten.

9. Vorrichtung (500) nach Anspruch 8, wobei die Selektions-Komponenten (530) eine erste Datenbank umfassen zur Ablage der Sensor-Roh-Daten und/oder eine zweite Datenbank zur Ablage der Informationen über die zu identifizierenden Objekte.

10. Kraftfahrzeug mit einer Vorrichtung (500) gemäß einem der Ansprüche 8 oder 9.

## Claims

1. Method (100) for characterizing objects to be identified, comprising
acquiring (110) sensor data from a first source of sensor information and a second source of sensor information;
taking the sensor data as a basis for determining (120) at least one object to be identified; wherein a hierarchic model is used in which a data cloud containing all the sensor data serves as a basis; selecting (130) that sensor information from the first source that is associated with the object to be identified;
using information based on the selected sensor information from the first source to characterize (140) the object to be identified;
wherein the characterization of the object to be identified is limited to sensor data from the first source of sensor information;
wherein the first source of sensor information is a local sensor of a vehicle (210) and provides sensor raw data, and wherein the second source of sensor information is a remote sensor and provides sensor messages (220) via an interface, and
wherein objects to be identified are all items, persons and vehicles present in the vehicle environment.

2. Method (100) according to Claim 1, wherein the local sensor detects the environment of the vehicle and the remote sensor detects the status of at least one further vehicle and/or detects the environment of the at least one further vehicle and/or provides status detection as a Cooperative Awareness Message - CAM - and/or as a Decentralized Environmental Notification Message - DENM.

3. Method (100) according to either of the preceding claims, wherein the determining of the object to be identified is also based on fused data (340), which are based on a combination of sensor raw data from a plurality of sensors, in addition to the sensor data (320, 330) associated with the identified object.

4. Method (100) according to one of the preceding claims, wherein additional information indicating a probability of existence and/or a duration of existence of the object is provided along with the identified objects.

5. Method (100) according to one of the preceding claims, wherein a data field (400) is received in the vehicle (210) via a mobile network, wherein the data field (400) comprises:
a description field (420) comprising an identification of the further vehicle and/or a position of the further vehicle and/or a distance of the further vehicle and/or
a speed of the further vehicle and/or an acceleration of the further vehicle and/or at least one property of the local sensors of the further vehicle; and/or the data field also comprises:
a dynamic object container (430) comprising the description of at least one dynamic object; and/or the data field also comprises
a static object container (440) comprising the description of at least one static object.

6. Method (100) according to Claim 5, wherein the dynamic object container (430) comprises at least one dynamic object (432, 434), which in turn comprises:
sensor information from the first source and/or localization information, which contains a local or a global reference value, and/or dynamics information for describing the object dynamics and/or a classification of the object and/or an estimated geometric dimension of the object; and/or wherein
the static object container (440) comprises at least one static object (442, 444), which in turn comprises: sensor information from the first source and/or localization information and/or a classification of the object and/or an estimated geometric dimension of the object or an occupancy grid of a detection area.

7. Method (100) according to one of the preceding claims, wherein a data field (400) is received in the vehicle (210) via a mobile network, wherein the data field (400) comprises:
a description field (420) comprising an identification of the further vehicle and a position of the further vehicle and a distance of the further vehicle and a speed of the further vehicle and an acceleration of the further vehicle and at least one property of the local sensors of the further vehicle; and the data field (400) also comprises
a dynamic object container (430) comprising the description of at least one dynamic object (432, 434); and the data field (400) also comprises
a static object container (440) comprising the description of at least one static object (442, 444), wherein
the dynamic object (432, 434) in turn comprises: sensor information from the first source and localization information, which contains a local or a global reference value, and dynamics information for describing the object dynamics and a classification of the object and an estimated geometric dimension of the object; and wherein
the static object (442, 444) in turn comprises: sensor information from the first source and localization information and a classification of the object and an occupancy grid.

8. Device (500) for characterizing objects to be identified, comprising:
sensor-data acquisition components (510) for acquiring sensor data comprising a first source of sensor information and a second source of sensor information;
determination components (520) for taking the sensor data as a basis for determining at least one object to be identified; wherein a hierarchic model is used in which a data cloud containing all the sensor data serves as a basis;
selection components (530) for selecting that sensor information from the first source that is associated with the object to be identified;
interfaces (540) for providing information about the object to be identified and information based on the selected sensor information from the first source;
wherein the characterization of the object to be identified is limited to sensor data from the first source of sensor information;
wherein the first source of sensor information is a local sensor of a vehicle (210) and provides sensor raw data, and wherein the second source of sensor information is a remote sensor and provides sensor messages (220) via an interface, and
wherein objects to be identified are all items, persons and vehicles present in the vehicle environment.

9. Device (500) according to Claim 8, wherein the selection components (530) comprise a first database for storing the sensor raw data and/or a second database for storing the information about the objects to be identified.

10. Motor vehicle having a device (500) according to either of Claims 8 and 9.

## Revendications

1. Procédé (100) permettant de caractériser des objets à identifier, comprenant les étapes consistant à
détecter (110) des données de capteur provenant d'une première source d'informations de capteur et d'une seconde source d'informations de capteur ;
déterminer (120) au moins un objet à identifier sur la base des données de capteur ; un modèle hiérarchique étant mis en œuvre dans lequel un nuage de données contenant toutes les données de capteur sert de base ;
sélectionner (130) les informations de capteur de la première source qui sont associées à l'objet à identifier ;
caractériser (140) l'objet à identifier au moyen d'informations qui sont basées sur les informations de capteur sélectionnées de la première source ;
la caractérisation de l'objet à identifier étant limitée à des données de capteur provenant de la première source d'informations de capteur ;
la première source d'informations de capteur étant un capteur local d'un véhicule (210) et fournissant des données de capteur brutes, et la deuxième source d'informations de capteur étant un capteur distant et fournissant des messages de capteur (220) par l'intermédiaire d'une interface, et
dans lequel les objets à identifier sont tous les objets, personnes et véhicules qui se trouvent dans l'entourage du véhicule.

2. Procédé (100) selon la revendication 1, dans lequel le capteur local détecte l'entourage du véhicule et le capteur distant détecte l'état d'au moins un autre véhicule, et/ou détecte l'entourage du au moins un autre véhicule, et/ou fournit une détection d'état sous forme de message de conscience coopérative (« Cooperative Awareness Message »), CAM, et/ou de message de notification environnementale décentralisée (« Decentralized Environmental Notification Message »), DENM.

3. Procédé (100) selon l'une quelconque des revendications précédentes, dans lequel la détermination de l'objet à identifier est basée en plus des données de capteur (320, 330) associées à l'objet identifié en outre sur des données fusionnées (340) qui sont basées sur une combinaison de données de capteur brutes d'une pluralité de capteurs.

4. Procédé (100) selon l'une quelconque des revendications précédentes, dans lequel, avec les objets identifiés sont fournies des informations supplémentaires qui indiquent une probabilité d'existence et/ou une durée d'existence de l'objet.

5. Procédé (100) selon l'une quelconque des revendications précédentes, dans lequel, dans le véhicule (210), un champ de données (400) est reçu par un réseau mobile, le champ de données (400) comprenant :
o un champ de description (420) qui comprend une identification de l'autre véhicule et/ou une position de l'autre véhicule et/ou une distance de l'autre véhicule et/ou une vitesse de l'autre véhicule et/ou une accélération de l'autre véhicule et/ou au moins une propriété des capteurs locaux de l'autre véhicule ; et/ou le champ de données comprend en outre :
un conteneur d'objets dynamiques (430) qui comprend la description d'au moins un objet dynamique ; et/ou le champ de données comprend en outre
un conteneur d'objets statiques (440) qui comprend la description d'au moins un objet statique.

6. Procédé (100) selon la revendication 5, dans lequel le conteneur d'objets dynamiques (430) comprend au moins un objet dynamique (432, 434) qui comprend à son tour : des informations de capteur de la première source et/ou une information de localisation qui contient une grandeur de référence locale ou une grandeur de référence globale et/ou une indication de dynamique pour la description de la dynamique d'objet et/ou une classification de l'objet et/ou une dimension géométrique estimée de l'objet ; et/ou dans lequel
le conteneur d'objets statiques (440) comprend au moins un objet statique (442, 444) qui comprend à son tour : des informations de capteur de la première source et/ou une information de localisation et/ou une classification de l'objet et/ou une dimension géométrique estimée de l'objet ou une grille d'occupation d'un espace de détection.

7. Procédé (100) selon l'une quelconque des revendications précédentes, dans lequel un champ de données (400) est reçu dans le véhicule (210) par l'intermédiaire d'un réseau mobile, le champ de données (400) comprenant :
un champ de description (420) qui comprend une identification de l'autre véhicule et une position de l'autre véhicule et une distance de l'autre véhicule et une vitesse de l'autre véhicule et une accélération de l'autre véhicule et au moins une propriété des capteurs locaux de l'autre véhicule ; et le champ de données (400) comprend en outre
un conteneur d'objets dynamiques (430) qui comprend la description d'au moins un objet dynamique (432, 434) ; et le champ de données (400) comprend en outre
un conteneur d'objets statiques (440) qui comprend la description d'au moins un objet statique (442, 444), dans lequel
l'objet dynamique (432, 434) comprend à son tour : des informations de capteur de la première source et une information de localisation qui contient une grandeur de référence locale et une grandeur de référence globale et une indication de dynamique pour décrire la dynamique d'objet et une classification de l'objet et une dimension géométrique estimée de l'objet ; et dans lequel
l'objet statique (442, 444) comprend à son tour : des informations de capteur de la première source et une information de localisation et une classification de l'objet et une grille d'occupation.

8. Dispositif (500) permettant de caractériser des objets à identifier, comprenant :
des composants de détection de données de capteur (510) permettant de détecter des données de capteur qui comprennent une première source d'informations de capteur et une deuxième source d'informations de capteur ;
des composants de détermination (520) permettant de déterminer au moins un objet à identifier sur la base des données de capteur ; un modèle hiérarchique étant mis en œuvre dans lequel un nuage de données contenant toutes les données de capteur sert de base ;
des composants de sélection (530) permettant de sélectionner les informations de capteur de la première source qui sont associées à l'objet à identifier ;
des interfaces (540) permettant de fournir des informations concernant l'objet à identifier et des informations qui sont basées sur les informations de capteur sélectionnées de la première source ; la caractérisation de l'objet à identifier étant limitée à des données de capteur provenant de la première source d'informations de capteur ;
la première source d'informations de capteur étant un capteur local d'un véhicule (210) et fournissant des données de capteur brutes, et la deuxième source d'informations de capteur étant un capteur distant et fournissant un message de capteur (220) par l'intermédiaire d'une interface, et
les objets à identifier étant tous les objets, personnes et véhicules qui se trouvent dans l'entourage du véhicule.

9. Dispositif (500) selon la revendication 8, dans lequel les composants de sélection (530) comprennent une première base de données pour enregistrer des données de capteur brutes et/ou une deuxième base de données pour enregistrer les informations concernant les objets à identifier.

10. Véhicule automobile comprenant un dispositif (500) selon l'une quelconque des revendications 8 ou 9.
